# EUROPÄISCHE PATENTSCHRIFT

(11) **EP 3 859 929 B1**
(45) Veröffentlichungstag und Bekanntmachung des Hinweises auf die Patenterteilung: **01.06.2022**
(21) Anmeldenummer: 20154370.9
(22) Anmeldetag: 29.01.2020
(51) Int. Cl.: H02J 3/14

(54) **ENERGIESYSTEM SOWIE VERFAHREN UND VORRICHTUNGEN ZU DESSEN STEUERUNG**
ENERGY SYSTEM AND METHOD AND DEVICES FOR MANAGING THE SAME
SYSTÈME ÉNERGÉTIQUE AINSI QUE SES PROCÉDÉS ET DISPOSITIFS DE COMMANDE

(43) Veröffentlichungstag der Anmeldung: 04.08.2021
(73) Patentinhaber: Siemens Aktiengesellschaft, 80333 München (DE)
(72) Erfinder: Gottschalk, Corinna, 81379 München (DE); Seydenschwanz, Martin, 81541 München (DE)

(56) Entgegenhaltungen:
- WO-A1-2013/152188
- US-B1- 8 239 070

## Beschreibung

### TECHNISCHES GEBIET

Die Erfindung liegt auf dem Gebiet der Energietechnik und betrifft insbesondere ein Verfahren zur Steuerung eines Energiesystems, Computerprogrammlogik zur Ausführung des Verfahrens und eine Vorrichtung zur Steuerung eines Energiesystems.

### HINTERGRUND

Bei einem Energiesystem mit mehreren Bussen und Komponenten wird üblicherweise eine Lastverteilung zwischen den Bussen und Komponenten, wie etwa zwischen Erzeugern und Verbrauchern, die über einen der Busse verbunden sind, derart gesteuert, dass die Leistungsbilanz ausgeglichen ist. So lässt sich etwa eine dezentrale Stromerzeugung in Microgrids - wie etwa für eine autarke Energieversorgung von Gebäuden, Industrieanlagen oder Inseln - mittels einer Kombination aus konventionellen Erzeugern und regenerativen Energiequellen realisieren, wobei eine jeweils von einem der konventionellen oder regenerativen Erzeugern bereitzustellende Leistungsmenge im Ausgleich zu den Verbrauchern zu steuern ist.

Zur Steuerung einer Lastverteilung in einem Energiesystem, wie etwa einem Energienetz, werden üblicherweise verschiedene gemischt-ganzzahlige (nicht-) lineare Modelle verwendet. Allerdings kann das Lösen derartiger Lastverteilungsprobleme und folglich von gemischt-ganzzahligen (nicht-) linearen Optimierungsproblemen zu einem hohen Rechenaufwand und damit zu hohen Anforderungen an eine entsprechende Steuerungsvorrichtung sowie zu Verzögerungen oder nicht-robustem Verhalten bei der Steuerung führen können.

Auch bei einer Auslegung und etwaiger Simulation eines solchen Energiesystems könnte - bei Berücksichtigung einer Steuerung durch Lösen von gemischt-ganzzahliger (nicht-) linearen Lastverteilungsproblemen - eine Komplexität und/oder ein Rechenaufwand erhöht werden, sodass etwa die Simulation vereinfacht werden müsste, diese viel Zeit oder Rechenleistung erfordern könnte oder nur eine verringerte Anzahl an möglichen Variationen simuliert werden können, also etwa Ungenauigkeiten auftreten oder eine etwaig bessere Eignung von anderen, nicht simulierten Varianten nicht überprüft und bei der Auslegung folglich nicht berücksichtigt werden könnte. Andererseits kann es bei vereinfachten Modellen zur Berücksichtigung der Lastenverteilung bei der Auslegung zu Ungenauigkeiten kommen oder können für bestimmte Energiesysteme keine Lösungen für Lastenverteilungen gefunden werden.

US 8 239 070 B1 zeigt ein Verfahren zur Steuerung eines Energiesystems mit mehreren Komponenten, bei denen die Arbeitspunkte der Komponenten iterativ entsprechend einer Rangfolge festgelegt werden.

### KURZZUSAMMENFASSUNG DER ERFINDUNG

Es besteht Bedarf, Verfahren und Vorrichtungen zur Steuerung eines Energiesystems sowie ein Energiesystem, welches mittels eines solchen Verfahrens oder einer solchen Vorrichtung gesteuert wird, und ein Verfahren bei einer Simulation von Energiesystemen zu verbessern und dabei insbesondere einen Rechenaufwand für die Steuerung zu reduzieren, ein Verhalten einer solchen Steuerung robuster zu machen und/oder eine Steuerung innerhalb einer vorbestimmten Zeitspanne zu ermöglichen.

Verschiedene hierin beschriebenen Techniken erfüllen diesen Bedarf jeweils durch ein computerimplementiertes Verfahren zur Steuerung eines Energiesystems mit mehreren Komponenten, eine Computerprogrammlogik zur Ausführung eines solchen Verfahrens sowie durch eine Vorrichtung zur Steuerung eines Energiesystems mit mehreren Komponenten jeweils gemäß der Lehre eines der unabhängigen Ansprüche. Ausführungsformen, Weiterbildungen und Varianten der vorliegenden Erfindung sind insbesondere Gegenstand der abhängigen Ansprüche.

Ein erster Aspekt der Erfindung betrifft ein computerimplementiertes Verfahren zur Steuerung eines Energiesystems. Dabei weist das Energiesystem mehrere Komponenten auf, die mittels einer Vielzahl von Bussen des Energiesystems miteinander energetisch verbunden sind, wobei die Komponenten Erzeuger und Verbraucher umfassen. Die Komponenten sind wahlweise als nicht-fixiert oder fixiert gekennzeichnet, je nachdem ob ihr energetischer Betriebspunkt festgelegt ist. Das Verfahren umfasst ein Iterieren über alle Busse der Vielzahl von Bussen. Eine jeweilige Iteration für den jeweils ausgewählten Bus umfasst jeweils ein Versuchen eines Ausgleichs einer Leistungsbilanz des ausgewählten Busses durch Festlegen der energetischen Betriebspunkte von mit dem jeweiligen Bus verbundenen Komponenten, die als nicht-fixiert gekennzeichnet sind. Weiterhin umfasst die jeweilige Iteration, wenn der Ausgleich für den jeweiligen Bus erfolgreich ist, ein Kennzeichnen aller mit dem jeweiligen Bus verbundenen Komponenten als fixiert. Weiterhin umfasst die jeweilige Iteration, wenn der Ausgleich für den jeweiligen Bus nicht erfolgreich ist, ein Umwandeln der Kennzeichnung von zumindest einer mit dem jeweiligen Bus verbundenen Komponente von fixiert in nicht-fixiert und ein Auslösen einer erneuten Iteration für den jeweiligen Bus.

Das bedeutet, dass in der erneuten Iteration ein erneuter Versuch eines Ausgleichs der Leistungsbilanz ermöglicht wird, wobei etwaig zuvor als fixiert gekennzeichnete Komponenten nun als nicht-fixiert gekennzeichnet sind und somit etwaige Freiheitsgrade für den Ausgleich erhöht werden, wodurch sich ein erfolgreicher Ausgleich ermöglichen lassen kann. Auch kann es mittels solcher Techniken möglich sein, bei jedem Bus die energetischen Betriebspunkte der damit verbundenen Komponenten festzulegen und zugleich eine Anzahl an Iterationen in Abhängigkeit von einer Anzahl der Vielzahl an Bussen sowie an etwaig erforderlichen erneuten Iterationen zu begrenzen. Allgemein kann sich ein Rechenaufwand für die Steuerung des Energiesystems reduzieren, wodurch sich die Steuerung auch bei laufzeitkritischen Energiesystemen und/oder eine Steuerung oder Optimierung in Echtzeit ermöglichen lässt. Auch kann ein Vorteil insbesondere darin liegen, dass sich ein Verhalten eines derartigen regelbasierten Verfahrens bzw. einer entsprechenden Vorrichtung zur Steuerung des Energiesystems bei deren Auslegung und deren physischen Betrieb leichter nachvollziehen lässt, wodurch eine robustere Auslegung ermöglicht wird und sich etwaige Fehler bei der Steuerung leichter auffinden und/oder beheben lassen. Eine solche Technik kann auch eine regelbasierte Steuerung einer Lastverteilung zwischen den Komponenten über die Busse ermöglichen. Dadurch lassen sich einerseits - insb. gegenüber Lösungen, die auf gemischt-ganzzahligen (nicht-) linearen Optimierungsproblemen basieren - ein Rechenaufwand und entsprechende Anforderungen an eine entsprechende Computerprogrammlogik oder Steuerungsvorrichtung reduzieren. Außerdem lässt sich eine Robustheit der Steuerung steigern. Andererseits - etwa gegenüber einfachen regelbasierten Steuerungen, welche etwa keine erneuten und/oder erneut-wiederholten Iterationen umfassen, - kann eine Steuerung einer beliebig komplexen Topologie der Busse und Komponenten und deren Kopplung - etwa auch für verschiedene Energieformen, eine große Anzahl an Bussen, etwa mehr als zwei oder fünf, oder für mehrere Busse mit ähnlichen, insbesondere hohen, Bus-Prioritäten - ermöglicht werden.

In einigen Ausführungsformen umfasst das Verfahren weiterhin, wenn für einen ausgewählten Bus der Ausgleich nicht erfolgreich ist, ein Auslösen einer erneuten Iteration über ein oder mehrere Busse, die mit dem ausgewählten Bus über eine Komponente verbunden sind, deren Kennzeichnung von fixiert in nicht-fixiert umgewandelt wird. Bei einigen Varianten davon wird zunächst die erneute Iteration über den ausgewählten Bus ausgeführt und anschließend etwaig eine erneute Iteration über den einen oder die mehreren Busse, die mit dem ausgewählten Bus über eine Komponente verbunden sind, deren Kennzeichnung von fixiert in nicht-fixiert umgewandelt wird. Auf diese vorteilhafte Weise lässt sich zunächst der ausgewählte Bus ausgleichen - also etwa ein Versuch eines Ausgleichs der Leistungsbilanz des ausgewählten Busses ausführen -, ohne dass mit dem ausgewählten Bus verbundene Busse oder entsprechend als fixiert gekennzeichnete Komponenten, die mit beiden Bussen verbunden sind, berücksichtigt werden, wodurch sich insbesondere die Freiheitsgrade zum Ausgleich der Leistungsbilanz erhöhen und somit etwa ein erfolgreicher Ausgleich wahrscheinlicher wird. Auch lassen sich auf diese vorteilhafte Weise der eine oder die mehreren Busse, die mit dem ausgewählten Bus über eine Komponente verbunden sind, deren Kennzeichnung von fixiert in nicht-fixiert umgewandelt wird, einem erfolgreichen Ausgleich des ausgewählten Busses entsprechend sowie etwaig unter Beachtung des ausgeglichenen ausgewählten Busses und der entsprechend als fixiert gekennzeichneten Komponenten ausgleichen.

Erfindungsgemäß umfasst das Verfahren weiterhin ein Zuweisen von Bus-Prioritäten zu den Bussen und ein Iterieren über alle Busse gemäß einer Reihenfolge in Übereinstimmung mit den Bus-Prioritäten.

Auf diese vorteilhafte Weise lässt sich eine Reihenfolge, in welcher das Iterieren erfolgt, vorbestimmen. So können etwa die Bus-Prioritäten derart gewählt werden, dass ein mit dem Verfahren gesteuertes Energiesystem thermisch geführt ist oder elektrisch geführt ist. Dies kann beispielsweise abhängig davon erfolgen, ob die Prioritäten von Bussen für eine thermische Energieform höher sind bzw. ob die Prioritäten von Bussen für eine elektrische Energie höher sind. Alternativ oder zusätzlich können die Bus-Prioritäten derart gewählt sein, dass zunächst Busse und deren Erzeuger verwendet werden, deren Betriebskosten geringer sind oder welche eine höhere Leistungsfähigkeit aufweisen. So können etwa die Bus-Prioritäten basierend auf einer vorgelagerten Simulation des Energiesystems bestimmt und im Verfahren als vorbestimmte Werte verwendet werden. Entsprechend können etwa die Bus-Prioritäten basierend auf physischen Versuchen an einem solchen Energiesystem bestimmt werden. Auch können in einigen Varianten die Bus-Prioritäten im Verfahren bestimmt und/oder angepasst werden - etwa basierend auf einer Analyse eines Verhaltens der Steuerung mittels dem Verfahren, auf einer Benutzereingabe oder auf externen Daten wie etwa Wetterdaten oder Daten bezüglich eines externen Energienetzes, zum Beispiel Daten bezüglich Auslastungen und/oder Kosten von einem Stromnetz. Auch können in einigen Varianten die Bus-Prioritäten abhängig von einer Uhrzeit, einem Datum und/oder einem Wochentag angepasst werden, wobei etwa für unterschiedliche Uhrzeiten/Kalendertage/Wochentage unterschiedliche vorbestimmte Bus-Prioritäten, die etwa mittels einer Simulation bestimmt oder von einem Benutzer eingegeben worden sind, abgespeichert sein können.

Die oben genannten Varianten für die Bestimmung der Bus-Prioritäten können auch miteinander kombiniert werden.

Bei einigen Ausführungsformen, bei welchen den Bussen jeweils eine Bus-Priorität zugewiesen oder zugeordnet ist, umfasst das Verfahren weiterhin, wenn für einen ausgewählten Bus der Ausgleich nicht erfolgreich ist, ein Auslösen einer erneuten Iteration über ein oder mehrere Busse, die eine höhere Bus-Priorität haben als der ausgewählte Bus und die mit dem ausgewählten Bus über eine Komponente verbunden sind, die als nicht fixiert gekennzeichnet wird. Auf diese Weise lassen sich die Leistungsbilanzen dieser Busse in Reihenfolge ihrer Bus-Priorität ausgleichen unter Beachtung der durch den Ausgleich der Leistungsbilanz des ausgewählten Busses als fixiert gekennzeichneten Komponenten. Auch wird in einigen Varianten, wenn für einen ausgewählten Bus der Ausgleich nicht erfolgreich ist, die Kennzeichnung nur für jene Komponenten, welche nur mit dem ausgewählten Bus oder welche mit dem ausgewählten Bus und einem Bus mit höherer Bus-Priorität verbunden sind, von fixiert in nicht-fixiert umgewandelt.

Auch wird ein Verfahren zur Steuerung eines Energiesystems mit mehreren Bussen, die einen oder mehrere Verbraucher und einen oder mehrere Erzeuger energetisch verbinden, bereitgestellt, welches computerimplementiert sein kann. Das Verfahren umfasst ein Ausgleichen der Busse in Reihenfolge ihrer jeweiligen Bus-Priorität, z.B. solange jeweils ein Ausgleichen eines gemäß der Reihenfolge ausgewählten Busses unter Beachtung von jeweils bereits ausgeglichenen Bussen möglich ist. Weiterhin umfasst das Verfahren, falls bei dem ausgewählten Bus das Ausgleichen nicht möglich ist, ein Ausgleichen des ausgewählten Busses ohne Beachtung der jeweils bereits ausgeglichenen Busse, die mit dem ausgewählten Bus verbunden sind, und erneutes Ausgleichen der mit dem ausgewählten Bus verbundenen Busse unter Beachtung der übrigen bereits ausgeglichenen Busse und des sodann ausgeglichenen ausgewählten Busses.

Auch wird ein computerimplementiertes Verfahren zur Steuerung eines Energiesystems bereitgestellt. Dabei weist das Energiesystem einen oder mehrere Verbraucher und einen oder mehrere Erzeuger auf, die mittels mehrerer Busse des Energiesystems miteinander energetisch verbunden sind. Das Verfahren umfasst ein Iterieren über alle Busse, wobei von den Bussen jeweils ein Bus ausgewählt wird, dessen Bus-Priorität unter jenen Bussen, welche nicht ausgeglichen sind, am höchsten ist. Eine Iteration für den jeweils ausgewählten Bus umfasst ein Bestimmen eines Gesamtleistungsbedarfs des ausgewählten Busses. Weiterhin umfasst die jeweilige Iteration ein Ausgleichen des Gesamtleistungsbedarfs, sofern dies möglich, und ein Kennzeichnen des jeweils ausgewählten Busses als ausgeglichen, wobei von mit dem ausgewählten Bus verbundenen Erzeugern bereitzustellende Leistungsmengen jeweils festgelegt werden oder bereits aufgrund eines Ausgleichens bei einem anderen der Busse festgelegt sind. Andernfalls umfasst die jeweilige Iteration ein Kennzeichnen aller mit dem jeweils ausgewählten Bus verbundenen Busse, welche keine niedrigere Priorität als der ausgewählte Bus haben, als nicht ausgeglichen, ein Aufheben etwaiger Festlegungen von bereitzustellenden Leistungsmengen bei Erzeugern, welche nicht mit einem Bus mit niedrigere Priorität als der ausgewählte Bus verbunden sind, und ein Ausgleichen zunächst des Gesamtleistungsbedarfs des ausgewählten Busses.

Ein zweiter Aspekt der Erfindung betrifft eine Computerprogrammlogik, die eingerichtet ist, um das Verfahren zur Steuerung des Energiesystems, insbesondere gemäß dem ersten Aspekt, auszuführen.

Die möglichen Vorteile, Ausführungsformen oder Varianten des ersten Aspekts der Erfindung gelten entsprechend auch für die Computerprogrammlogik.

Ein dritter Aspekt der Erfindung betrifft eine Vorrichtung zur Steuerung eines Energiesystems mit mehreren Komponenten, die mittels einer Vielzahl von Bussen des Energiesystems miteinander energetisch verbunden sind, wobei die Komponenten Erzeuger und Verbraucher umfassen, wobei die Komponenten wahlweise als nicht-fixiert oder fixiert gekennzeichnet sind, je nachdem ob ihr energetischer Betriebspunkt festgelegt ist. Dabei weist die Vorrichtung eine Computerprogrammlogik oder eine andere Steuerungseinrichtung auf, die eingerichtet ist, ein Verfahren zur Steuerung nach einem der Ansprüche 1 bis 12 auszuführen.

Die möglichen Vorteile, Ausführungsformen oder Varianten der vorhergehenden Aspekte der Erfindung gelten entsprechend auch für Vorrichtung zur Steuerung des Energiesystems. Auch kann die Vorrichtung zur Steuerung des Energiesystems eingerichtet sein, ein solches Verfahren zur Steuerung des Energiesystems auszuführen. Entsprechend kann auch ein Verfahren zur Steuerung des Energiesystems ein Erzeugen eines Steuerungssignals und/oder ein Steuern des Energiesystems mittels des Steuerungssignals umfassen.

Ein weiterer Aspekt der Erfindung betrifft ein Energiesystem mit einer Vorrichtung zu dessen Steuerung gemäß dem dritten Aspekt der Erfindung und mit mehreren Komponenten, die mittels einer Vielzahl von Bussen des Energiesystems miteinander energetisch verbunden sind, wobei die Komponenten Erzeuger und Verbraucher umfassen.

Ein weiterer Aspekt der Erfindung betrifft ein Verfahren zur Simulation eines Energiesystems in Zusammenwirkung mit einer Steuerungsvorrichtung gemäß dem dritten Aspekt der Erfindung oder mit einem Verfahren zur Steuerung des Energiesystems, etwa gemäß dem ersten Aspekt der Erfindung. Dabei weist das Energiesystem mehrere Komponenten auf, die mittels einer Vielzahl von Bussen des Energiesystems miteinander energetisch verbunden sind, wobei die Komponenten Erzeuger und Verbraucher umfassen, wobei die Komponenten wahlweise als nicht-fixiert oder fixiert gekennzeichnet sind, je nachdem ob ihr energetischer Betriebspunkt festgelegt ist. Das Verfahren zur Simulation umfasst ein Ausführen mehrerer Simulationsschritte, wobei in den Simulationsschritten jeweils ein Verhalten der Komponenten des Energiesystems simuliert wird sowie jeweils das Verfahren zur Steuerung oder entsprechend einer Simulation der Vorrichtung zur Steuerung anhand eines entsprechenden Verfahrens zur Steuerung ausgeführt wird.

Die möglichen Vorteile, Ausführungsformen oder Varianten der vorhergehenden Aspekte der Erfindung gelten entsprechend auch für die weiteren Aspekte der Erfindung. Auch kann ein Vorteil einer Simulation mit einem derartigen Verfahren zur Steuerung insbesondere darin liegen, dass das Verfahren zur Steuerung eine geringere Rechenleistung erfordert, wodurch dieses in jedem Simulationsschritt effizient und entsprechend einer späteren - etwaig mittels einer Steuerungsvorrichtung physischen - Realisierung ausführen lässt, womit sich eine hohe Übertragbarkeit der Simulationsergebnisse auf eine spätere Realisierung erzielen lässt und/oder es ermöglicht wird, eine Vielzahl an Simulationen auszuführen, um eine besonders geeignete Auslegung eines basierend auf der Simulation realisierten Energiesystems mit einer zugehörigen Vorrichtung zu dessen Steuerung zu erzielen.

Weitere Vorteile, Merkmale und Anwendungsmöglichkeiten ergeben sich aus der nachfolgenden detaillierten Beschreibung von Ausführungsbeispielen und/oder aus den Figuren.

### KURZE BESCHREIBUNG DER FIGUREN

Die Erfindung wird nachfolgend unter Bezugnahme auf die Figuren anhand vorteilhafter Ausführungsbeispiele näher erläutert. Gleiche Elemente oder Bauteile der Ausführungsbeispiele werden im Wesentlichen durch gleiche Bezugszeichen gekennzeichnet, falls dies nicht anders beschrieben wird oder sich nicht anders aus dem Kontext ergibt.

Hierzu zeigen, teilweise schematisiert:
- Fig. 1: ein Energiesystem mit mehreren Bussen und Komponenten sowie mit einer Vorrichtung zur Steuerung des Energiesystems nach einer Ausführungsform;
- Fig. 2: ein Flussdiagramm eines Verfahrens nach einer Ausführungsform zur Steuerung eines Energiesystems;
- Fig. 3: ein Flussdiagramm eines Verfahrens nach einer Ausführungsform bezüglich eines Ausgleichens von Bussen eines Energiesystems;
- Fig. 4: ein Flussdiagramm eines Verfahrens nach einer Ausführungsform bezüglich einer Leistungsoptimierung; und
- Fig. 5: einen Ablauf beim Ausgleich von Bussen eines Energiesystems mittels eines Verfahrens nach einer Ausführungsform.

### DETAILLIERTE BESCHREIBUNG VON AUSFÜHRUNGSFORMEN

Die Figuren sind schematische Darstellungen verschiedener Ausführungsformen und/oder Ausführungsbeispiele der vorliegenden Erfindung. In den Figuren dargestellte Elemente und/oder Bauteile sind nicht notwendigerweise maßstabsgetreu dargestellt. Vielmehr sind die verschiedenen, in den Figuren dargestellten Elemente und/oder Bauteile derart wiedergegeben, dass ihre Funktion und/oder ihr Zweck dem Fachmann verständlich werden.

In den Figuren dargestellte Verbindungen und Kopplungen zwischen den funktionellen Einheiten und Elementen können auch als indirekte Verbindungen oder Kopplungen implementiert werden. Insbesondere können Datenverbindungen drahtgebunden oder drahtlos, also insbesondere als Funkverbindungen, ausgebildet sein. Auch können bestimmte Verbindungen, etwa elektrische Verbindungen, etwa zur Energieversorgung, der Übersichtlichkeit halber nicht dargestellt sein.

Nachfolgend werden Techniken beschrieben, die die regelbasierte Steuerung einer Lastverteilung in hybriden Energiesystemen mit einer Bus-Topologie ermöglichen. Dazu kann ein energetischer Betriebspunkt von mit einem Bus des Energiesystems verbundenen Komponenten bestimmt werden, das heißt zum Beispiel die abgegebene elektrische Leistung bei Energieerzeugern oder die verbrauchte elektrische Leistung bei Lasten. Dabei kann über die verschiedenen Busse iteriert werden und jeweils für jeden Bus in der jeweiligen Iteration ein Ausgleich der Leistungsbilanz des ausgewählten Busses durch die Festlegung der energetischen Betriebspunkte der mit dem jeweiligen Bus verbundenen Komponenten versucht werden. Dabei können selektiv lediglich die Betriebspunkte solcher Komponenten festgelegt werden, die noch nicht als "fixiert" gekennzeichnet sind (das heißt solche Komponenten, für die nicht in einer vorangegangenen Iteration bereits der Betriebspunkt festgelegt wurde und die deshalb als "fixiert" gekennzeichnet sind). Es können also nach und nach die verschiedenen Busse (z.B. in einer äußeren Logik-Schleife) und die verschiedenen Komponenten (z.B. in einer inneren Logik-Schleife) abgearbeitet werden. Dies kann bis zu einem Abbruchkriterium durchgeführt werden, wobei unterschiedlichste Abbruchkriterien denkbar sind.

Solche Techniken können mit Backtracking kombiniert werden: Manchmal kann eine solche iterative Abarbeitung von Bussen bzw. Komponenten in einer nicht auflösbaren Situation resultieren, das heißt der Ausgleich der Leistungsbilanz eines in einer bestimmten Iteration bearbeiteten Busses schlägt fehl. Dann wäre es denkbar, dass solche Komponenten, die bereits in einer früheren Iteration als "fixiert" gekennzeichnet wurden, erneut abgearbeitet werden, um trotzdem eine Bestimmung der Betriebspunkte mit ausgeglichener Leistungsbilanz zu ermöglichen. Schlägt auch eine solche erneute Abarbeitung von Bussen fehl, so kann - sofern ein entsprechendes Abbruchkriterium erfüllt ist - ein Fehler gemeldet werden.

Als allgemeine Regel könnte nach Abschluss der Iterationen über die verschiedenen Busse - das heißt nach Festlegen der Betriebspunkte für alle Komponenten - eine nachgelagerte Leistungsoptimierung erfolgen. Im Rahmen der Leistungsoptimierung wäre es denkbar, dass die Betriebspunkte für die verschiedenen Komponenten angepasst werden. Dabei können unterschiedlichste Techniken im Zusammenhang mit der Leistungsoptimierung angewendet werden. Die Leistungsoptimierung kann sozusagen eine Feineinstellung der zuvor festgelegten Betriebspunkte ermöglichen.

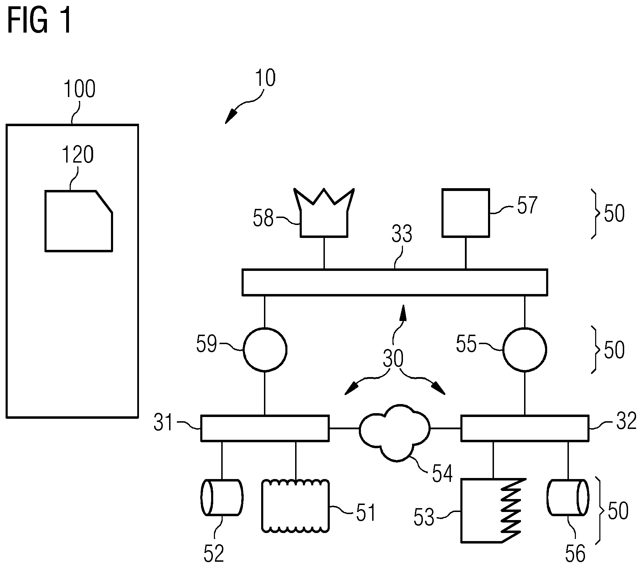

Fig. 1 zeigt schematisch ein Energiesystem 10 mit einer Vorrichtung 100 zu dessen Steuerung nach einer Ausführungsform der vorliegenden Erfindung.

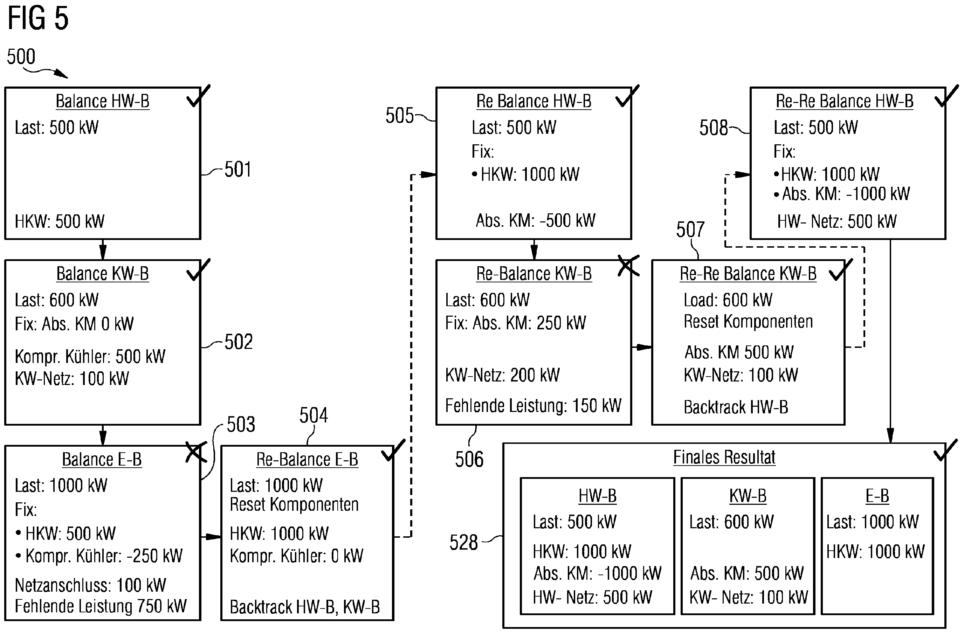

In einem Ausführungsbeispiel weist das Energiesystem 10 mehrere Busse - etwa zwei, drei, fünf oder mehr Busse, also etwa eine Vielzahl 30 von Bussen - auf sowie mehrere Komponenten 50, welche Erzeuger und Verbraucher umfassen, die je einen energetischen Betriebspunkt - etwa im Rahmen einer Minimalleistung und einer Maximalleistung - haben und mittels der Vielzahl von Bussen 30 miteinander energetisch verbunden sind. So ist das Energiesystem 10 in einem solchen Ausführungsbeispiel, für welches ein Ablauf beim Ausgleich der Busse in Fig. 5 schematisch dargestellt ist, als ein hybrides Energiesystem ausgebildet. Dabei weist das hybride Energiesystem 10 einen Heiß-Wasser-Bus 31, mit welchem als einer der Verbraucher eine Heiß-Wasser-Last 51 und als einer der Erzeuger ein Heiß-Wasser-Netzanschluss 52 verbunden ist, einen Kalt-Wasser-Bus 32, mit welchem als einer der Verbraucher eine Kalt-Wasser-Last 53 und als einer der Erzeuger ein KaltWasser-Netzanschluss 56 verbunden ist, und einen elektrischen Bus 33, mit welchem als einer der Verbraucher eine elektrische Last 57 und als einer der Erzeuger ein Stromnetzanschluss 58 verbunden ist, auf sowie als weitere hybride Erzeuger der Komponenten 50 eine Absorptions-Kühlmaschine 54, welche mit dem Heiß-Wasser-Bus 31 und dem Kalt-Wasser-Bus 32 verbunden ist, eine Kompressions-Kühlmaschine 55, welche mit dem Kalt-Wasser-Bus 32 und dem elektrischen Bus 33 verbunden ist, und Heizkraftwerk 59, welches mit dem Heiß-Wasser-Bus 31 und dem elektrischen Bus 33 verbunden ist.

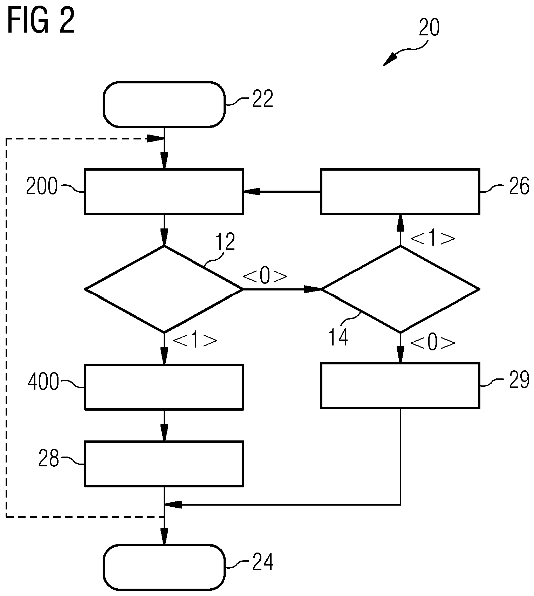

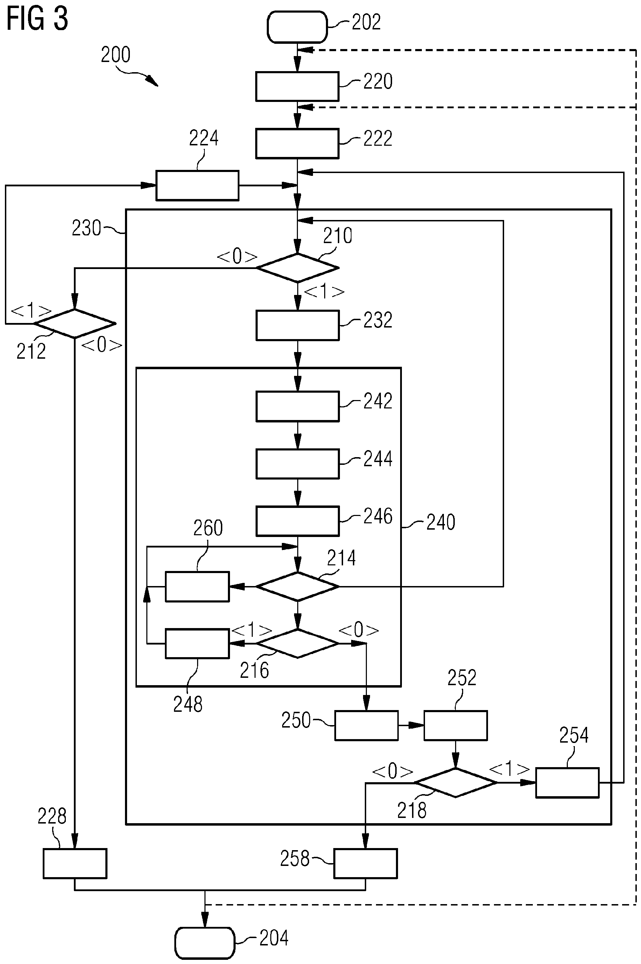

In einem Ausführungsbeispiel weist die Vorrichtung 100 zur Steuerung des Energiesystems 10 eine Computerprogrammlogik 120 auf, die eingerichtet ist, ein Verfahren zur Steuerung des Energiesystems 10 auszuführen. Dabei umfasst dieses Verfahren in einigen Varianten ein in Zusammenhang mit Fig. 2 beschriebenes Verfahren 20 oder ein in Zusammenhang mit Fig. 3 beschriebenes Verfahren 200. Auch umfasst das Verfahren in einigen Varianten zumindest:
- Iterieren über alle Busse der Vielzahl von Bussen, wobei eine Iteration für den jeweils ausgewählten Bus jeweils aufweist:
   -- Versuchen eines Ausgleichs einer Leistungsbilanz des ausgewählten Busses durch Festlegen der energetischen Betriebspunkte von mit dem jeweiligen Bus verbundenen Komponenten, die als nicht-fixiert gekennzeichnet sind;
   -- wenn der Ausgleich für den jeweiligen Bus erfolgreich ist: Kennzeichnen aller mit dem jeweiligen Bus verbundenen Komponenten als fixiert, und
   -- wenn der Ausgleich für den jeweiligen Bus nicht erfolgreich ist: Umwandeln der Kennzeichnung von mit dem jeweiligen Bus verbundenen Komponenten von fixiert in nicht-fixiert, und Auslösen einer erneuten Iteration für den jeweiligen Bus.

Die Computerprogrammlogik 120 ist weiterhin eingerichtet, basierend auf den im Verfahren festgelegten energetischen Betriebspunkten ein Steuersignal zu erzeugen, sofern ein Ausgleich für alle Busse möglich gewesen ist, und andernfalls ein Fehlersignal - wenn z.B. ein entsprechendes Abbruchkriterium erfüllt ist. Die Vorrichtung 100 ist weiterhin eingerichtet, das Energiesystem 10 zu steuern, wobei die jeweiligen energetischen Betriebspunkte der Komponenten 50 basierend auf dem Steuersignal festgelegt werden und/oder bei dem Fehlersignal das Energiesystem 10 in einen sicheren Zustand gebracht wird, die energetischen Betriebspunkte unverändert gelassen werden - etwa entsprechend eines vorangegangenen Zeitschrittes für die Steuerung des Energiesystems - und/oder das Steuerverfahren basierend auf einem erneuten Ausführen des Verfahrens für einen weiteren Zeitschritt erzeugt wird. Dabei ist die Vorrichtung 100 in einigen Varianten mit den Komponenten 50 des Energiesystems 10 datenverbunden. Auch ist die Vorrichtung 100 in einigen Varianten mit der Vielzahl an Bussen 30, etwa zur Überwachung der tatsächlichen Energieflüsse - also der jeweils über den jeweiligen Bus übertragenen Leistungsmengen -, datenverbunden.

Fig. 2 zeigt schematisch ein Flussdiagramm eines Verfahrens 20 zur Steuerung eines Energiesystems nach einer Ausführungsform der vorliegenden Erfindung.

In einem Ausführungsbeispiel entspricht das Energiesystem dem Energiesystem 10, welches in Zusammenhang mit Fig. 1 beschrieben ist.

In einem Ausführungsbeispiel beginnt das Verfahren 20 beim Verfahrensstart 22 und endet beim Verfahrensende 24. Das Verfahren 20 umfasst die Verfahrensschritte 26, 28, 29, 200 und 400 und die Verfahrensbedingungen 12 und 14. Dabei können einige der Verfahrensschritte - etwa die Verfahrensschritte 200 und 400 - selbst jeweils ein Verfahren nach einer Ausführungsform der vorliegenden Erfindung oder ein Teilverfahren eines solchen sein. Auch können einzelne Verfahrensschritte, eine Folge an Verfahrensschritten oder das gesamte Verfahren mehrfach wiederholt, etwa je für einen Zeitschritt für die Steuerung des Energiesystems, ausgeführt werden.

Im Verfahrensschritt 200 werden die Leistungsbilanzen der Busse, sofern möglich, ausgeglichen und dabei die energetischen Betriebspunkte der Komponenten des Energiesystems festgelegt. In einigen Varianten wird dazu ein Verfahren 200, wie es in Zusammenhang mit Fig. 3 beschrieben ist, ausgeführt.

Bei Verfahrensbedingung 12 wird überprüft, ob die Leistungsbilanzen der Busse ausgeglichen sind und entsprechend die energetischen Betriebspunkte festgelegt werden konnten.

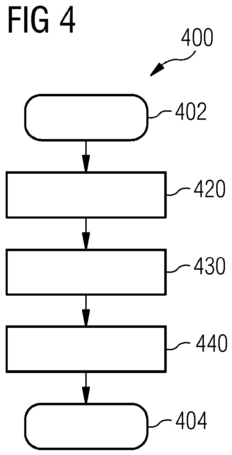

In diesem Fall - symbolisiert durch <1> - wird eine Leistungsoptimierung im Verfahrensschritt 400 mit einer oder mehreren Maßnahmen ausgeführt, wobei im Rahmen der Leistungsoptimierung zumindest einige der zuvor festgelegten energetischen Betriebspunkte angepasst werden. In einigen Varianten wird dazu ein Verfahren 400, wie es in Zusammenhang mit Fig. 4 beschrieben ist, ausgeführt.

Andernfalls - symbolisiert durch <0> - wird bei Verfahrensbedingung 14 überprüft, ob ein Lastabwurf möglich ist, also ob wenigstens einer der Verbraucher eine abwerfbare Last ist, welche noch nicht abgeworfen worden ist. In diesem Fall - symbolisiert durch <1> - wird Verfahrensschritt 26 ausgeführt; andernfalls wird Verfahrensschritt 29 ausgeführt.

Im Verfahrensschritt 29 wird ein Fehlersignal erzeugt, welches signalisiert, dass keine Lösung für eine Lastenverteilung des Energiesystems gefunden werden konnte.

Nach dem Verfahrensschritt 29 kann das Verfahren 20 für einen weiteren Zeitschritt bei der Steuerung des Energiesystems erneut - und etwa mit anderen Leistungsbedarfen und oder möglicherweise bereitstellbarer Leistungsmengen - ausgeführt werden oder beim Verfahrensende 24 beendet werden.

Im Verfahrensschritt 26 wird aus den Verbrauchern eine abwerfbare Last ausgewählt, deren Komponenten-Priorität unter einer oder mehrerer abwerfbarer Lasten der Verbraucher, die noch nicht abgeworfen worden sind, am höchsten ist. Daraufhin wird diese ausgewählte abwerfbare Last abgeworfen, also etwa ihr Leistungsbedarf auf null gesetzt. Daraufhin wird das Verfahren 20 erneut ausgeführt, wobei alle Komponenten als nicht-fixiert gekennzeichnet werden und das Iterieren über alle Busse re-initialisiert wird.

Nach Verfahrensschritt 400, wird im Verfahrensschritt 28 ein Steuersignal basierend auf den Verfahrensschritten 200 und 400 erzeugt oder ein in einem der Verfahrensschritte 200 oder 400 erzeugtes Steuersignal verwendet, welches zumindest die festgelegten energetischen Betriebspunkten charakterisiert, und werden mittels des Steuersignals die Komponenten angesteuert. Das Verfahren 20 kann für einen weiteren Zeitschritt bei der Steuerung des Energiesystems erneut - und etwa mit anderen Leistungsbedarfen und/oder möglicherweise bereitstellbaren Leistungsmengen - ausgeführt werden oder beim Verfahrensende 24 beendet werden.

Fig. 3 zeigt schematisch ein Flussdiagramm eines Verfahrens 200 nach einer Ausführungsform der vorliegenden Erfindung bezüglich eines Ausgleichens von Bussen eines Energiesystems bei einer Steuerung eines Energiesystems.

In einem Ausführungsbeispiel entspricht das Energiesystem dem Energiesystem 10, welches in Zusammenhang mit Fig. 1 beschrieben ist. Auch wird in einem Ausführungsbeispiel das Verfahren 200 als Teil des Verfahrens 20, welches in Zusammenhang mit Fig. 2 beschrieben ist, ausgeführt.

In einem Ausführungsbeispiel wird das Verfahren 200 mit einem Backtracking-Algorithmus implementiert. Im Sinne der Offenbarung wird bei einem Backtracking-Algorithmus versucht eine Gesamtlösung basierend auf erreichten Teillösungen zu bestimmen, wobei, sofern ein Versuch zum Erreichen einer Teillösung fehlschlägt - also etwa eine Leistungsbilanz eines Busses nicht ausgeglichen werden kann -, eine oder mehrere der Teillösungen zurückgenommen werden und für diese zurückgenommenen Teillösungen versucht wird, alternative Teillösungen zu erreichen.

In einem Ausführungsbeispiel beginnt das Verfahren 200 beim Verfahrensstart 202 und endet beim Verfahrensende 204. Das Verfahren 200 umfasst die Verfahrensschritte 220, 222, 224, 230, 232, 240, 242, 244, 246, 248, 260, 250, 252, 254, 228 und 258 sowie die Verfahrensbedingungen 210, 212, 214, 216 und 218. Dabei können einzelne Verfahrensschritte, eine Folge an Verfahrensschritten oder das gesamte Verfahren mehrfach wiederholt, etwa je für einen Zeitschritt für die Steuerung des Energiesystems, ausgeführt werden.

Im Verfahrensschritt 220 wird jedem der Busse jeweils eine Bus-Priorität zugewiesen.

Im Verfahrensschritt 222 wird eine Liste aller Busse erstellt, welche entsprechend der Bus-Prioritäten geordnet ist, sodass etwa jener Bus, welcher die höchste Priorität hat, das erste Element der Liste ist und jener Bus, welcher die niedrigste Priorität hat, das letzte Element der Liste ist.

Im Verfahrensschritt 230 wird über alle Busse, also über alle Elemente der Liste iteriert. Dabei weist der Verfahrensschritt 230 die Verfahrensschritte 232, 240, 250, 252 und 254 sowie die Verfahrensbedingung 210 und 218 auf.

Bei der Verfahrensbedingung 210 wird überprüft, ob die Liste wenigstens einen Bus aufweist. Falls dies der Fall ist - symbolisiert durch <1>, wird Verfahrensschritt 232 ausgeführt. Falls dies nicht der Fall ist - symbolisiert durch <0> -, wird das Verfahren 200 bei der Verfahrensbedingung 212 fortgesetzt.

Im Verfahrensschritt 232 wird aus der Liste das erste Element, also etwa der Bus mit der höchsten Priorität unter den Bussen in der Liste, und somit der Bus als ausgewählter Bus ausgewählt sowie das Element aus der Liste entfernt - oder entsprechend ein Index für die Liste, welcher jeweils auf ein auszuwählendes Element zeigt, beginnend von null bei der ersten Iteration jeweils um eins erhöht. Daraufhin wird Verfahrensschritt 240 für den somit jeweils ausgewählten Bus ausgeführt.

Im Verfahrensschritt 240 wird ein Ausgleich einer Leistungsbilanz des jeweils ausgewählten Busses versucht. Dabei weist der Verfahrensschritt 240 die Verfahrensschritte 242, 244, 246, 248 und 260 sowie die Verfahrensbedingungen 214 und 216 auf.

Im Verfahrensschritt 242 werden für jeden mit dem ausgewählten Bus verbundenen Erzeuger der Komponenten des Energiesystems eine jeweilige Minimalleistung und eine jeweilige Maximalleistung bezüglich des ausgewählten Busses bestimmt. Auch wird für etwaige mit dem ausgewählten Bus verbundene hybride Erzeuger jeweils ein etwaiger Leistungsbedarf, welcher aufgrund einer Festlegung eines energetischen Betriebspunktes des jeweiligen hybriden Erzeugers bei einem anderen der Busse festgelegt ist, oder eine entsprechend festgelegter minimaler oder maximaler Leistungsbedarf oder auch eine aufgrund der Festlegung bei dem anderen der Busse entsprechend beschränkte Minimalleistung und Maximalleistung bestimmt. Auch können entsprechend ein jeweiliger minimaler und maximaler Leistungsbedarf der mit dem ausgewählten Bus verbundenen Verbraucher der Komponenten des Energiesystems bestimmt werden, sofern ihr jeweiliger Leistungsbedarf steuerbar ist und/oder angepasst werden kann, oder ein jeweiliger, insbesondere fixer, Leistungsbedarf der Verbraucher bestimmt werden.

Im Verfahrensschritt 244 wird ein Gesamtleistungsbedarf des ausgewählten Busses basierend auf dem jeweiligen minimalen und dem maximalen Leistungsbedarf oder dem fixen Leistungsbedarf von den mit dem Bus verbundenen Verbrauchern sowie etwaig von hybriden Erzeugern bestimmt. In einigen Varianten wird dazu die Summe aus den minimalen Leistungsbedarfen - von den Verbrauchern, welche steuerbar/anpassbar sind, und von den hybriden Erzeugern - sowie aus den fixen Leistungsbedarfen der übrigen mit dem ausgewählten Bus verbundenen Verbraucher und der übrigen hybriden Erzeuger, welche aufgrund einer Festlegung bei einem anderen der Busse einen Leistungsbedarf aufweisen, berechnet.

Im Verfahrensschritt 246 wird eine Summe der bereitgestellten Leistungsmengen bzw. Minimalleistungen von etwaig mit dem jeweils ausgewählten Bus verbundenen hybriden Erzeugern, deren jeweils bereitgestellte Leistungsmenge oder Leistungsmenge entsprechend ihrer jeweiligen Minimalleistung aufgrund einer Festlegung ihres Betriebspunktes bezüglich eines anderen der Busse festgelegt ist, berechnet. Weiterhin wird ein übriger Teil des Gesamtleistungsbedarfs berechnet, wobei vom Gesamtleistungsbedarf die Summe der bereitgestellten Leistungsmengen und Minimalleistungen abgezogen wird.

Bei Verfahrensbedingung 214 wird abhängig vom übrigen Teil des Gesamtleistungsbedarfs das Verfahren fortgesetzt: wenn der übrige Teil zumindest im Wesentlichen null - der Versuch des Ausgleichs der Leistungsbilanz des ausgewählten Busses also erfolgreich - ist, werden energetische Betriebspunkte von etwaig noch als nicht-fixiert gekennzeichneten Erzeugern am ausgewählten Bus als fixiert gekennzeichnet und ihre jeweils bereitzustellende Leistungsmenge auf null oder - etwa bei hybriden Erzeugern, deren Minimalleistung aufgrund einer Festlegung bei einem anderen der Busse festgelegt ist - auf die jeweilige Minimalleistung festgelegt und daraufhin das Verfahren 200 bei Verfahrensbedingung 210 fortgesetzt; wenn der übrige Teil zumindest im Wesentlichen negativ ist - also etwa ein Leistungsüberschuss an dem ausgewählten Bus besteht -, bei Verfahrensschritt 260; und wenn der übrige Teil zumindest im Wesentlichen positiv ist - also die Leistungsbilanz am ausgewählten Bus nicht ausgeglichen ist und weiterer Leistungsbedarf besteht -, bei Verfahrensbedingung 216.

Im Verfahrensschritt 260 wird, wenn eine oder mehrere der Verbraucher Leistungsabwurflasten sind, der Gesamtleistungsbedarf des ausgewählten Busses mittels einer solchen mit dem ausgewählten Bus verbundenen Leistungsabwurflast erhöht. Dabei wird der - etwaig negative - übrige Teil des Gesamtleistungsbedarfs entsprechend erhöht. In einigen Varianten davon sind den Leistungsabwurflasten Komponenten-Prioritäten zugeordnet, wobei der Gesamtleistungsbedarf entsprechend der Komponenten-Prioritäten der Leistungsabwurflasten jeweils mit jener Leistungsabwurflast erhöht wird, mittels welcher zuvor noch keine Leistung abgeworfen worden ist. Daraufhin wird das Verfahren 200 bei Verfahrensbedingung 214 fortgesetzt.

Bei Verfahrensbedingung 216 wird überprüft, ob einer oder mehrere der mit dem ausgewählten Bus verbundenen Erzeuger als nicht-fixiert gekennzeichnet sind und/oder ein energetischer Betriebspunkt von einem solchen Erzeuger für den ausgewählten Bus noch nicht festgelegt ist. Sofern dies der Fall ist - symbolisiert durch <1> -, wird im Verfahrensschritt 248 von diesen Erzeugern jener mit der höchsten Priorität ausgewählt, sein energetischer Betriebspunkt derart festgelegt, dass dessen entsprechend bereitgestellte Leistungsmenge den übrigen Teil des Gesamtleistungsbedarfs ausgleicht oder zumindest entsprechend der Maximalleistung dieses Erzeugers reduziert - dieser Erzeuger also seine Maximalleistung als Leistungsmenge bereitstellt -, dieser Erzeuger als fixiert gekennzeichnet und das Verfahren 200 bei Verfahrensbedingung 214 fortgesetzt. Andernfalls - der Ausgleich der Leistungsbilanz des jeweils ausgewählten Busses ist also für dieses Ausführen des Verfahrensschritts 240 nicht erfolgreich, symbolisiert durch <0> -, wird das Verfahren 200 bei Verfahrensschritt 250 fortgesetzt.

Im Verfahrensschritt 250 werden die Komponenten, welche den ausgewählten Bus mit einem Bus verbinden, der eine höhere Priorität als der ausgewählte Bus hat, sowie - in einigen Varianten - Komponenten, die nur mit dem ausgewählten Bus verbunden sind, als nicht-fixiert gekennzeichnet. Entsprechend werden in einigen alternativen Varianten die Komponenten, die mit wenigstens einem Bus aus der Liste verbunden sind, als nicht-fixiert gekennzeichnet. In einigen Varianten werden also im Sinne eines Backtrackings Teilergebnisse - also etwa Festlegungen von Betriebspunkten und/oder Leistungsmengen, etwa für Komponenten, die nicht mit einem Bus niedrigerer Priorität verbunden sind - aufgehoben.

Im Verfahrensschritt 252 wird erneut und entsprechend Verfahrensschritt 240 ein Ausgleich des ausgewählten Busses versucht, wobei etwaig von mit dem ausgewählten Bus verbundenen Erzeugern bereitstellbare Leistungsmengen bzw. Maximalleistungen nicht mehr aufgrund einer Festlegung bei einem anderen der Busse - insbesondere einem Bus mit höherer Bus-Priorität - beschränkt sind - also etwa ohne Beachtung von etwaigen Festlegungen bei anderen Bussen der Gesamtleistungsbedarf des ausgewählten Busses ausgeglichen werden kann und/oder der Gesamtleistungsbedarf etwaig aufgrund von noch nicht fixierten hybriden Erzeugern geringer ist.

Bei Verfahrensbedingung 218 wird überprüft, ob der Ausgleich in Verfahrensschritt 252 erfolgreich war, und in diesem Fall - symbolisiert durch <1> - Verfahrensschritt 254 ausgeführt; falls nicht - symbolisiert durch <0> wird Verfahrensschritt 258 ausgeführt.

Im Verfahrensschritt 254 wird eine erneute Iteration über ein oder mehrere Busse, die eine höhere Bus-Priorität haben als der ausgewählte Bus und die mit dem ausgewählten Bus über eine Komponente verbunden sind, die als nicht-fixiert gekennzeichnet wird, ausgelöst. Dazu wird eine weitere Liste erstellt, welche jene Busse - etwa aus der bisherigen Liste - aufweist, welche eine höhere Priorität als der ausgewählte Bus haben und über wenigstens eine Komponente mit dem ausgewählten Bus verbunden sind, und das Verfahren 200 rekursive ab Verfahrensschritt 230 für diese im Verfahrensschritt 254 erstellte Liste ausgeführt. In einigen Varianten werden also im Sinne eines Backtracking alternative Teilergebnisse basierend auf dem Ausgleich des ausgewählten Busses im Verfahrensschritt 252 und der im Verfahrensschritt 254 erstellten Liste bestimmt.

Bei Verfahrensbedingung 212 wird überprüft, ob noch wenigstens eine Liste aus einer vorangegangenen Rekursion oder die im Verfahrensschritt 222 erstellte Liste wenigstens ein Element aufweist. In diesem Fall - symbolisiert durch <1> -, wird Verfahrensschritt 224 ausgeführt. Andernfalls - symbolisiert durch <0> -, wird Verfahrensschritt 228 ausgeführt. Entsprechend können in einigen Varianten jene Busse, welche in wenigstens einer der Listen sind, als nicht-ausgeglichen gekennzeichnet sein, und/oder jene Busse, die in keiner der Listen (mehr) sind - und die etwaig nicht der ausgewählte Bus sind -, als ausgeglichen gekennzeichnet sein.

Im Verfahrensschritt 224 wird die wenigstens eine Liste aus der jeweils vorangegangenen Rekursion, welche noch wenigstens ein Element aufweist, oder die im Verfahrensschritt 222 erstellte Liste ausgewählt. Daraufhin wird das Verfahren 200 ab Verfahrensschritt 230 mit dieser ausgewählten Liste fortgeführt.

Im Verfahrensschritt 228 wird ein Steuersignal erzeugt, welches die festgelegten energetischen Betriebspunkte der Komponenten charakterisiert sowie kennzeichnet, dass der Ausgleich der Busse erfolgreich ist. In einigen Varianten kann Verfahrensschritt 228 auch ausgeführt werden, wenn alle Komponenten als fixiert gekennzeichnet sind.

Im Verfahrensschritt 258 wird ein Fehlersignal erzeugt, welches charakterisiert, dass - etwa zumindest für einen aktuellen Zeitschritt in der Steuerung - der Ausgleich der Leistungsbilanz der Busse nicht erfolgreich ist. In einigen Varianten kann Verfahrensschritt 258 auch ausgeführt werden, wenn der Versuch des Ausgleichs für mindestens einen Bus zu häufig fehlschlägt oder eine vorbestimmte Zeitspanne abgelaufen ist.

Nach Verfahrensschritt 228 oder 258 kann das Verfahren beim Verfahrensende 204 enden oder - etwa für einen weiteren Zeitschritt der Steuerung - bei Verfahrensschritt 220, bei welchem etwa für den weiteren Zeitschritt neue Prioritäten zugewiesen werden, oder bei Verfahrensschritt 222 fortgesetzt werden.

In einigen Varianten ist der Verfahrensschritt 228 mit einem Verfahrensschritt 28, wie bezüglich Fig. 2 beschrieben, kombiniert oder durch diesen ersetzt. In einigen Varianten ist der Verfahrensschritt 258 mit einem Verfahrensschritt 29, wie bezüglich Fig. 2 beschrieben, kombiniert oder durch diesen ersetzt.

In einigen abgewandelten Varianten wird ein Backtracking derart implementiert, dass keine Rekursion für die Listen oder keine Listen erforderlich sein. So sind in einigen Varianten davon, die Busse mittels einer Baumstruktur repräsentiert, etwa bezüglich ihrer Priorität und einer Kennzeichnung, ob ein jeweiliger Bus bereits ausgeglichen ist. Beim Iterieren wird jeweils jener Bus ausgewählt, welcher die höchste Priorität unter den (noch) nicht oder nicht mehr als ausgeglichen gekennzeichneten Bussen hat. Wenn ein Ausgleich beim jeweils ausgewählten Bus fehlschlägt, werden alle mit dem ausgewählten Bus verbundene Busse höherer Priorität als nicht-ausgeglichen gekennzeichnet - also etwa eine Kennzeichnung als "ausgeglichen" aufgehoben - und entsprechend Festlegungen von Betriebspunkten von Komponenten nur an dem ausgewählten Bus oder an dem ausgewählten Bus und einem der Busse mit höherer Priorität aufgehoben. Dabei ist ein Abbruchkriterium für das Iterieren, dass alle Busse als ausgeglichen gekennzeichnet sind oder ein Ausgleichen bei einem der Busse zu häufig fehlgeschlagen ist.

Fig. 4 zeigt schematisch ein Flussdiagramm eines Verfahrens 400 nach einer Ausführungsform der vorliegenden Erfindung bezüglich einer Leistungsoptimierung bei einer Steuerung eines Energiesystems.

In einem Ausführungsbeispiel entspricht das Energiesystem dem Energiesystem 10, welches in Zusammenhang mit Fig. 1 beschrieben ist. Auch wird in einem Ausführungsbeispiel das Verfahren 400 als Teil des Verfahrens 20, welches in Zusammenhang mit Fig. 2 beschrieben ist, ausgeführt.

In einem Ausführungsbeispiel beginnt das Verfahren 400 beim Verfahrensstart 402 und endet beim Verfahrensende 404. Das Verfahren 400 umfasst die Verfahrensschritte 420, 430 und 440. Dabei können einzelne Verfahrensschritte, eine Folge an Verfahrensschritten oder das gesamte Verfahren mehrfach wiederholt, etwa je für einen Zeitschritt für die Steuerung des Energiesystems, ausgeführt werden.

Im Verfahrensschritt 420 werden etwaige Leistungsüberschüsse, wenn für diese keine Eigennutzung stattfinden soll, zu rückspeisefähigen Erzeugern wie etwa Netzanschlüssen über die Busse geleitet und von den rückspeisefähigen Erzeugern exportiert sowie etwaig verbleibende Leistungsüberschüsse in etwaige Speicher des Energiesystems geladen. Somit wird in einigen Varianten davon als eine der Maßnahmen bei der Leistungsoptimierung eine Energieaustauschsteuerung ausgeführt, wobei zunächst ein externer Lastausgleich durchgeführt wird - also etwa Leistungsüberschüsse in rückspeisefähige Erzeuger mit externen Ressourcen und/oder wenigstens einen Netzanschluss geleitet werden - und darauf für etwaige verbleibende Leistungsüberschüsse ein interner Lastausgleich durchgeführt wird - verbleibende Leistungsüberschüsse also etwa in einem Speicher des Energiesystems gespeichert werden und/oder also etwa über Busse geleitet und/oder zwischen Bussen mittels eines oder mehrerer hybrider Erzeuger übertragen werden. Wenn eine Eigennutzung von Leistungsüberschüssen stattfinden soll, werden zunächst etwaige Speicher geladen, die mit einem Bus, bei welchem ein Leistungsüberschuss auftritt, verbunden sind; verbleibende Leistungsüberschüsse werden gemäß der Bus-Prioritäten an andere Busse übertragen und dort etwaige Speicher geladen oder über Netzanschlüsse an, mit den Netzanschlüssen verbundene Versorgungsnetze, exportiert. Somit wird in einigen Varianten davon als eine der Maßnahmen bei der Leistungsoptimierung eine Energieaustauschsteuerung ausgeführt, wobei zunächst ein interner Lastausgleich durchgeführt wird und darauf für etwaige verbleibende Leistungsüberschüsse ein externer Lastausgleich durchgeführt wird. Dabei werden die Betriebspunkte der rückspeisefähigen Erzeuger wie Netzanschlüssen oder Speichern des Energiesystems entsprechend angepasst. Auch können in einigen Varianten der externe und der interne Lastausgleich basierend auf einem Eigennutzung-Parameter derart kombiniert sein, dass ein Teil der Leistungsüberschüsse entsprechend dem Eigennutzung-Parameter zunächst für den internen Lastausgleich verwendet wird - etwa ein bestimmter Prozentsatz oder eine bestimmte absolute Leistungsmenge - und verbleibende Leistungsüberschüsse für den externen Lastausgleich verwendet werden.

Im Verfahrensschritt 430 werden Lastspitzen beim Importieren von Energie - also etwa bei externen Ressourcen, etwa aus Versorgungsnetzen - mittels Entladens von Speichern des Energiesystems reduziert.

Weiterhin werden im Verfahrensschritt 430 Kosten für eine externe Ressource bestimmt und basierend darauf bestimmt, ob eine Leistung in Energieform dieser externen Ressource importiert und Speicher des Energiesystems geladen werden sollen, oder ob ein solches Importieren durch Bereitstellen von Leistungsmengen durch Entladen von Speichern des Energiesystems reduziert werden soll oder eine Leistung in der Energieform der externen Ressource an ein entsprechendes Versorgungsnetz exportiert werden soll - etwa indem Speicher des Energiesystems entladen werden und so Leistungsmengen bereitstellen. Auch wird bei einigen Varianten basierend auf den Kosten für eine externe Ressource ein Leistungsüberschuss derart erhöht - etwa indem der Betriebspunkt eines Erzeugers, insbesondere eines ressourcenabhängigen und/oder hybriden Erzeugers, derart angepasst und dieser mittels eines Steuersignals angesteuert wird, dass dieser in einen Bus eine erhöhte Leistungsmenge einspeist -, das ein Leistungsüberschuss bei diesem Bus erzeugt oder erhöht wird und dieser etwaig erhöhte Leistungsüberschuss mittels einer Komponente bezüglich der externen Ressource exportiert wird - also etwaig in ein Versorgungsnetz für diese externe Ressource eingespeist wird.

Hierbei werden die Betriebspunkte der rückspeisefähigen Erzeuger wie Netzanschlüssen oder Speichern des Energiesystems entsprechend angepasst. Auf diese vorteilhafte Weise lassen sich Versorgungsnetze je zur Versorgung mit einer externen Ressource stabilisieren und/oder Kosten aufgrund einer Benutzung einer solchen externen Ressource reduzieren und/oder Tarifschwankungen bezüglich einer solchen Ressource nutzen.

Im Verfahrensschritt 440 wird als eine Maßnahme bei der Leistungsoptimierung eine Speicherverwaltung bzw. ein Speichermanagement ausgeführt, bei welchem basierend auf einem oder mehreren Speicher-Verwaltungs-Parametern bestimmt wird, ob ein Speicher des Energiesystems geladen oder entladen werden soll. So kann etwa in einigen Varianten eine Batterie als Speicher des Energiesystems bis zu einem vorbestimmten bevorzugten Füllstand als Speicherverwaltungsparameter geladen oder entladen werden. Dabei kann in einigen Varianten beim Entladen der Batterie als weiterer Speicher-Verwaltung-Parameter entsprechend einer geplanten Entladedauer entladen werden. Dabei werden die Betriebspunkte der Speicher entsprechend angepasst.

Fig. 5 zeigt schematisch einen Ablauf beim Ausgleich von Bussen eines Energiesystems mittels eines Verfahrens nach einer Ausführungsform, wobei das Energiesystem 10 etwa im Zusammenhang mit Fig. 1 und das Verfahren etwa im Zusammenhang mit Fig. 3 geschrieben ist.

Beim Ablauf eines solchen Ausführungsbeispiels können die energetischen Betriebspunkte der Komponenten des Energiesystems regelbasiert anhand eines Backtracking-Algorithmus festgelegt werden. Im Folgenden wird der Bus 31 aus Fig. 1 auch als "HW-B" bezeichnet, der Bus 32 als "KW-B" und der Bus 33 als "E-B" sowie die Komponente 51 als "HW-Last", die Komponente 52 als "HW-NA", die Komponente 53 als "KW-Last", die Komponente 54 als "AK", die Komponente 55 als "KK", die Komponente 56 als "KW-NA", die Komponente 57 als "E-Last", die Komponente 58 als "E-NA" und die Komponente 59 als "HKW".

Dabei können die Komponenten etwa die folgenden Leistungsbedarfe, bereitstellbaren Leistungsmengen oder Maximalleistungen sowie weitere Eigenschaften wie Wirkungsgrad - etwa für hybride Erzeuger - haben:
Bus 31: Heiß-Wasser Bus (HW-B)
   a) HW Last: 500 kW;
   b) Absorptions-Kühlmaschine: 1000 kW (Wirkungsgrad 50%);
   c) Heizkraftwerk: 2000 kW
      (Verhältnis elektrisch / thermisch = 1 / 1);
   d) HW-Netzanschluss: 1000 kW.
Bus 32: Kalt-Wasser Bus (KW-B)
   a) KW Last: 600 kW;
   b) Absorptions-Kühlmaschine: 500 kW;
   c) Kompressions-Kühler: 250 kW
      (Effizienz elektrisch ~ thermisch = 50%);
   d) KW-Netzanschluss: 1000 kW.
Bus 33: Elektrischer Bus (E-B)
   a) Elektrische Last: 1000 kW;
   b) Heizkraftwerk: 2000 kW;
   c) Kompressions-Kühler: 500 kW;
   d) E-Netzanschluss: 100 kW.

Damit könnte sich folgender Ablauf 500 und ein finales Resultat 528 ergeben:

| Schritt | Name | Beschreibung |
|---|---|---|
| | Start | Zustand vor Algorithmus |
| 501 | Balance HW-B | Balancierung des HW-B mit allen - i angeschlossenen Komponenten |
| 502 | Balance KW-B | Balancierung des KW-B mit nicht fixierten Komponenten |
| 503 | | Balancierung des E-B mit nicht fixierten Komponenten -> Nicht möglich, da E-NA max. 200 kW |
| 504 | Re-Balance E-B | Reset aller Komponenten an KW-B und verbundenen Bussen höherer Priorität (HW-B & KW-B), Balancierung E-B und Backtracking HW-B & KW-B |

| | | |
|---|---|---|
| 505 | Re-Balance HW-B (im Backtracking von Schritt 504) | Balancierung des HW-B mit nicht fixierten Komponenten |
| 506 | Re-Balance KW-B (im Backtracking von Schritt 504) | Balancierung des KW-B mit nicht fixierten Komponenten -> Nicht möglich, da KW-NA max. 200 kW |
| 507 | Re-Re-Balance KW-B | Reset aller Komponenten an KW-B und verbundenen Bussen höherer Priorität (HW-B), Balancierung KW-B und Backtracking HW-B |
| 508 | Re-Re-Balance HW-B (im Backtracking von Schritt 507) | Balancierung des HW-B mit nicht fixierten Komponenten |

Dabei werden in den Schritten 501 bis 508 die Betriebspunkte der Komponenten - also z.B. eine am Bus 31 bereitgestellte Wärmeleistung als in Form von thermischer Energie bereitgestellte Leistungsmenge des elektrisch betriebenen Heizkraftwerks 59 und ein damit korrespondierender Leistungsbedarf in Form von elektrischer Energie am Bus 33 - jeweils entsprechend festgelegt. Damit folgt, wobei bei "Status" jeweils die Last als Teil des jeweiligen Gesamtleistungsbedarfs am jeweiligen Bus angegeben ist, die sich aus den Leistungsbedarfen der jeweiligen Verbraucher - also etwa HW-Last, KW-Last oder E-Last - ergibt:

| Schritt | Status HW-B (Last = 500 kW) | Status KW-B (Last = 600 kW) | Status E-B (Last= 1000 kW) |
|---|---|---|---|
| (Start) | AK = 0 kW; | AK = 0 kW; | HKW = 0 kW; |
| | HKW = 0 kW; | KK = 0 kW; | KK = 0 kW; |
| | HW-NA =0 kW. | KW-NA = 0 kW. | E-NA = 0 kW. |
| 501 | **AK** = **0 kW;** | **AK = 0 kW;** | **HKW = 500 kW;** |
| | **HKW** = **500 kW;** | KK = 0 kW; | KK = 0 kW; |
| | HW-NA =0 kW. | KW-NA = 0 kW. | E-NA = 0 kW. |
| 502 | AK = 0 kW; | AK = 0 kW; | HKW = 500 kW; |
| | HKW = 500 kW; | **KK = 500 kW;** | **KK = -250 kW;** |
| | HW-NA =0 kW. | **KW-NA = 100 kW.** | E-NA = 0 kW. |
| 503 | AK = 0 kW; | AK = 0 kW; | HKW = 500 kW; |
| | HKW = 500 kW; | KK = 500 kW; | KK = -250 kW; |
| | HW-NA =0 kW. | KW-NA = 100 kW. | *E-NA = 200 kW.* |
| 504 | AK = 0 kW; | AK = 0 kW; | **HKW = 1000 kW;** |
| | **HKW = 1000 kW;** | **KK = 0 kW;** | **KK = 0 kW;** |
| | HW-NA =0 kW. | KW-NA = 100 kW. | **E-NA = 0 kW.** |
| 505 | **AK = -500 kW;** | **AK = 250 kW;** | HKW = 1000 kW; |
| | HKW = 1000 kW; | KK = 0 kW; | KK = 0 kW; |
| | **HW-NA =0 kW**. | KW-NA = 100 kW. | E-NA = 0 kW. |
| 506 | AK = -500 kW; | AK = 250 kW; | HKW = 1000 kW; |
| | HKW = 1000 kW; | KK = 0 kW; | KK = 0 kW; |
| | HW-NA =0 kW. | *KW-NA* = *200 kW.* | E-NA = 0 kW. |
| 507 | **AK = -1000 kW;** | **AK** = **500 kW;** | HKW = 1000 kW; |
| | HKW = 1000 kW; | KK = 0 kW; | KK = 0 kW; |
| | HW-NA =0 kW. | **KW-NA = 100 kW.** | E-NA = 0 kW. |
| 508 | AK = -1000 kW; | AK = 500 kW; | HKW = 1000 kW; |
| | HKW = 1000 kW; | KK = 0 kW; | KK = 0 kW; |
| | **HW-NA =500 kW.** | KW-NA = 100 kW. | E-NA = 0 kW. |

Bereits festgelegte Betriebspunkte und damit fixierte Komponenten bzw. Leistungsmenge/-bedarf sind unterstrichen dargestellt, ein im jeweiligen Schritt geänderter Betriebspunkt ist fett dargestellt und ein nicht ausgleichbarer übriger Teil eines Gesamtleistungsbedarfs doppelt unterstrichen und kursiv.

Mit dem Obenstehenden ergeben sich auch die folgenden Ausführungen und/oder sind mit dem Obenstehenden beispielhaft ausgeführt.

In einigen Ausführungsformen sind eine oder mehrere der Verbraucher Leistungsabwurflasten. Bei einigen Ausführungsformen davon umfasst das Verfahren, wenn beim Ausgleichen der Leistungsbilanz des ausgewählten Busses ein Leistungsüberschuss vorliegt, ein Erhöhen eines Gesamtleistungsbedarfs des ausgewählten Busses mittels einer solchen mit dem ausgewählten Bus verbundenen Leistungsabwurflast.

Auch wird in einigen Ausführungsformen ein Leistungsüberschuss bei einem der Busse mittels einer oder mehrerer Leistungsabwurflasten in Reihenfolge ihrer Priorität abgeworfen.

Ein Vorteil eines Abwerfens eines Leistungsüberschusses mittels einer Leistungsabwurflast kann insbesondere darin liegen, dass sich eine Robustheit der Steuerung erhöhen lässt.

In einigen Ausführungsformen umfasst das Verfahren, nachdem alle Komponenten als fixiert gekennzeichnet sind, weiterhin ein Ausführen einer Leistungsoptimierung mit einer oder mehreren Maßnahmen, wobei im Rahmen der Leistungsoptimierung zumindest einige der zuvor festgelegten Betriebspunkte angepasst werden.

Auch wird in einigen Ausführungsformen ein Leistungsüberschuss bei einem der Busse mittels einer oder mehrerer rückspeisefähiger Erzeuger in Reihenfolge ihrer Priorität rückgespeist.

Auch sind in einigen Ausführungsformen einer oder mehrere der Erzeuger rückspeisefähige Erzeuger. Dabei umfasst das Verfahren weiterhin ein Ausführen einer Leistungsoptimierung, wobei für wenigstens einen der Busse bei einem Leistungsüberschuss bei diesem Bus der Leistungsüberschuss oder ein Teil davon in einen solchen mit diesem Bus verbundenen rückspeisefähigen Erzeuger eingespeist wird.

Ein Vorteil der Leistungsoptimierung und/oder des Rückspeisens kann insbesondere darin liegen, dass - nachdem eine Lösung für einen Lastenausgleich gefunden worden ist und somit zunächst alle Komponenten als fixiert gekennzeichnet worden sind - die energetischen Betriebspunkte weiter optimiert werden können und etwaige Leistungsüberschüsse rückgespeist werden können, wodurch etwa eine Kosteneffizienz bei der Energieerzeugung erhöht und/oder Netze zur Energieversorgung - wie etwa Stromnetze, Fernwärmenetze, Fernkältenetze oder Brennstoffnetze - entlastet werden können. Auch wird es ermöglicht, etwaig super-optimale Parametrisierungen wie beispielsweise bei den Bus-Prioritäten oder den Prioritäten der Erzeuger und/oder Verbrauchern durch eine solche nachgelagerte Leistungsoptimierung auszugleichen, wodurch sich eine Energieeffizienz innerhalb des Energiesystems steigern lässt, womit das Verfahren weiter an Robustheit gewinnt.

In einigen Ausführungsformen ist ein rückspeisefähiger Erzeuger ein Energiespeicher oder ein Netzanschluss wie etwa ein Anschluss an ein Stromnetz, ein Anschluss an eine Fernwärmeversorgung oder ein Anschluss an eine Fernkälteversorgung.

Bei einigen Ausführungsformen, bei welchen eine Leistungsoptimierung ausgeführt wird, umfassen die ein oder mehreren Maßnahmen zumindest eines von Speicherung eines Leistungsüberschusses an einem Bus der Vielzahl von Busse in Energiespeichern, Austausch des Leistungsüberschusses zwischen Bussen der Vielzahl von Bussen, und Abgabe des Leistungsüberschusses über einen externen Netzanschluss des Energiesystems.

Bei einigen Ausführungsformen, bei welchen eine Leistungsoptimierung ausgeführt wird, sind einer oder mehrere der Erzeuger ressourcenabhängige Erzeuger. Dabei wird der Leistungsüberschuss bei einem mit dem ressourcenabhängigen Erzeuger verbundenen Bus erhöht, wenn ein vorbestimmtes Kriterium bezüglich einer Ressource für den ressourcenabhängigen Erzeuger erfüllt ist.

Im Sinne der Offenbarung ist unter einem "ressourcenabhängigen Erzeuger" zumindest ein Erzeuger zu verstehen, welcher zum Bereitstellen einer Leistungsmenge eine interne oder externe Ressource benötigt. Ein solcher ressourcenabhängiger Erzeuger kann etwa als Ressource eine konventionelle Versorgung benötigen - also etwa: ein Netzanschluss für ein Stromversorgungsnetz sein, wobei ein Beziehen von elektrischer Energie aus dem Stromversorgungsnetz Kosten verursacht und/oder Lastspitzen bei dem Stromversorgungsnetz vermieden werden sollen; oder ein mit Brennstoff betriebenes Kraftwerk sein, welches einen entsprechenden Brennstoff als Ressource benötigt. Entsprechend kann es wünschenswert sein im Rahmen der Leistungsoptimierung einen Verbrauch einer solchen Ressource zu reduzieren. Auch kann ein solcher ressourcenabhängiger Erzeuger etwa als Ressource eine sogenannte erneuerbare Energieform - etwa Sonnenenergie oder Geothermie - benötigen, welche etwaig frei zur Verfügung steht und somit zumindest im Wesentlichen keine Kosten verursacht, sodass deren Nutzung - soweit möglich - im Rahmen der Leistungsoptimierung gesteigert werden kann.

Bei einigen Ausführungsformen, bei welchen eine Leistungsoptimierung ausgeführt wird, umfassen die ein oder mehreren Maßnahmen eine Energieaustauschsteuerung für einen externen Netzanschluss des Energiesystems. In einigen Varianten umfasst die Energieaustauschsteuerung zumindest eines von einem internen und externen Lastausgleich.

Bei einigen Ausführungsformen, bei welchen eine Leistungsoptimierung ausgeführt wird, werden die ein oder mehreren Maßnahmen in Übereinstimmung mit einer vorgegebenen Priorisierung ausgewählt.

In einigen Ausführungsformen ist einer oder sind mehrere der Erzeuger Energiespeicher, welche jeweils einen Füllstand und/oder eine Priorität aufweisen, und wobei beim Ausgleich der Leistungsbilanz des jeweiligen Busses für wenigstens einen solchen mit dem jeweiligen Bus verbundenen Energiespeicher basierend auf seinem Füllstand und/oder seiner Priorität bestimmt wird, ob mittels diesem eine bestimmte Leistungsmenge bereitstellt oder in diesen rückgespeist wird. In einigen Varianten hat wenigstens einer der Energiespeicher einen bevorzugten Füllstand, wobei zudem anhand des bevorzugten Füllstands bestimmt wird, ob dieser einen etwaigen Leistungsüberschuss aus dem jeweils ausgewählten Bus aufnimmt oder eine Leistungsmenge in den jeweils ausgewählten Bus abgibt. In einigen Varianten ist der Energiespeicher ein Schwungrad, eine Batterie oder ein thermischer Speicher. Auch kann wenigstens einer der Energiespeicher eine oder mehrere SpeicherVerwaltung-Parameter haben - etwa eine geplante Entladedauer -, anhand welcher entschieden wird, wie schnell der Speicher, falls er nicht für den Ausgleich benötigt wird, laden oder entladen werden soll.

In einigen Ausführungsformen weist das Energiesystem ein hybrides Energiesystem auf oder besteht daraus. Bei einigen Ausführungsformen davon weist das hybride Energiesystem als Komponenten, insbesondere als einen oder mehrere der Erzeuger, einen oder mehrere hybride Erzeuger auf.

Im Sinne der Offenbarung ist unter einem "hybriden Energiesystem" zumindest ein System zur Verteilung von Leistungsmengen über einen oder mehrere Busse zu verstehen, wobei die Leistungsmengen in Form von verschiedenen Energieformen bereitgestellt werden. Derartige Energieformen können elektrische Energie oder verschiedene thermische Energien - wie etwa Kaltwasser, Heißwasser oder Dampf - oder Brennstoffe wie etwa Öl, Stadtgas, Methangas, Methangas, ... Butangas oder Wasserstoffgas - sein. Ein solches hybrides Energiesystem kann ein Microgrid - also etwa ein intelligentes und/oder lokal abgegrenztes Stromnetz - sein. Auch kann ein solches hybrides Energiesystem etwa ein Energieversorgungssystem eines Gebäudes sein, wobei das Energieversorgungssystem eingerichtet ist, eine Versorgung mit elektrischem Strom, Heißwasser, Kaltwasser und einer Beheizung - etwa mittels Heißwasser, erwärmter Luft oder elektrisch erzeugter Wärmestrahlung - bereitzustellen.

Ein Energiesystem im Sinne der Offenbarung kann eine oder mehrere Komponenten aufweisen. Wobei eine solche Komponente ein Verbraucher sein kann, welcher einen Bedarf an einer bestimmten Energieform - also einen, etwaig vorbestimmten, Leistungsbedarf einer bestimmten Leistungsmenge in dieser bestimmten Energieform - hat, oder ein Erzeuger, welcher eine Energieform - also eine vorbestimmte oder festlegbare Leistungsmenge in dieser Energieform - bereitstellen kann.

Dabei ist im Sinne der Offenbarung unter einem "hybriden Erzeuger" zumindest ein Erzeuger des Energiesystems zu verstehen, der mit mindestens zwei Bussen der Vielzahl von Bussen verbunden ist. Dabei kann ein solcher hybrider Erzeuger in einigen Varianten eine der Energieformen, welche im hybriden Energiesystem bereitgestellt wird, in eine andere der Energieformen, für welche im hybriden Energiesystem Bedarf besteht, umwandeln, also etwa Energiekonverter sein. So kann ein solcher hybrider Erzeuger oder etwa ein Energiekonverter als hybrider Erzeuger sein: ein Heizkraftwerk - welches elektrische Energie und Wärmeenergie erzeugt -, eine Absorption-Kühlmaschine, welche Heißwasser oder Dampf in Kaltwasser umwandelt - oder eine Kompressions-Kühlmaschine - welche mit elektrischer Energie Kaltwasser erzeugt -. Auch kann ein solcher hybrider Erzeuger in einigen Varianten jeweils eine Leistungsmenge in einer jeweiligen Energieform für den jeweiligen der mindestens zwei Busse bereitstellen. So kann ein solcher hybrider Erzeuger etwa eine Solaranlage sein, welche eine Ressource - also etwa Sonnenenergie, welche als externe Ressource und erneuerbare Energie(-form) nicht über das Energiesystem oder ein damit verbundenes Energieversorgungsnetz bereitgestellt werden muss - sowohl in elektrische Energie als auch in thermische Energie wie Heißwasser umwandelt. Weiter kann ein hybrider Erzeuger auch mit mehr als zwei Bussen verbunden sein, etwa gasbetriebenes Blockheizkraftwerk, welches einen Brennstoff - also eine Ressource wie etwa Stadtgas - sowohl in elektrische Energie als auch in thermische Energie wie Heißwasser umwandelt. Dabei kann das Stadtgas oder allgemeiner die Ressource über das Energiesystem, also etwa über einen entsprechenden Erzeuger und ein damit verbundenes Versorgungsnetz, etwa einen Gasanschluss bereitgestellt werden und entsprechend bei der Steuerung berücksichtigt werden oder alterativ aber als externe Ressource behandelt werden, welche etwaigen äußeren/externen Einflüssen unterliegt und/oder einen externen Faktor bei dem Verfahren darstellen kann - etwa Sonnenschein bei einer Solaranlage oder Kosten für Gas bei einer gasbetriebenen Komponente wie dem Blockheizkraftwerk -, deren Verfügbarkeit oder Bereitstellung jedoch nicht durch das Verfahren gesteuert wird.

Unter einem "Bus" ist im Sinne der Offenbarung zumindest eine Übertragungseinheit für eine Leistung in Form einer bestimmten Energieform zu verstehen, wobei an den Bus einer oder mehrere Erzeuger, welche zum Bereitstellen einer Leistungsmenge in dieser bestimmten Energieform eingerichtet sind, und einer oder mehrere Verbraucher, welche einen Leistungsbedarf in dieser bestimmten Energieform haben, derart anschließbar sind, dass Energie in dieser bestimmten Energieform von einem der Erzeuger zu einem der Verbraucher übertragen werden kann. Ein solcher Bus kann etwa sein: eine Rohrleitung, Luftverteilungssystem - etwa für Warmluft oder für Kaltluft -, ein elektrisches Kabel oder eine Welle - etwa zur Übertragung einer Drehbewegung. Dabei kann ein solcher Bus eingerichtet sein, eine bestimmte Maximalmenge der jeweiligen Energieform zwischenzuspeichern. Andererseits kann diese Maximalmenge verhältnismäßig gering sein oder ein solcher Bus nicht zur Speicherung der von ihm übertragenen Energieform eingerichtet sein, sodass - zumindest im Wesentlichen - Leistungsbedarfe von mit dem Bus verbundenen Verbrauchern durch entsprechend bereitgestellte Leistungsmengen von mit dem Bus verbundenen Erzeugern ausgeglichen werden müssen; entsprechend kann es auch erforderlich sein, dass bereitgestellte und in den Bus eingespeiste Leistungsmengen durch Verbraucher von dem Bus wieder entnommen werden, um einen Leistungsüberschuss auszugleichen bzw. zu vermeiden.

Unter einem "Leistungsüberschuss" ist im Sinne der Offenbarung zumindest zu verstehen, dass eine Summe an Leistungsmengen, welche von mit dem Bus verbundenen Erzeugern bereitgestellt werden, einen Gesamtleistungsbedarf an dem Bus übersteigt.

In einigen Ausführungsformen ist eine Leistungsfähigkeit einer der Busse, mehrerer der Busse oder alle der Busse unbeschränkt, sodass dieser jeweils eine beliebige Leistungsmenge in seiner jeweiligen Energieform übertragen kann.

Alternativ ist in einigen Ausführungsformen eine Leistungsfähigkeit wenigstens einer der Busse beschränkt, wobei dieser wenigstens eine Bus nur eine begrenzte Leistungsmenge in der jeweiligen Energieform übertragen kann, wobei beim Ausgleich dieses wenigstens einen Busses die beschränkte Leistungsfähigkeit derart berücksichtigt wird, dass der Gesamtleistungsbedarf für diesen wenigstens einen Bus - sofern der Gesamtleistungsbedarf etwa aufgrund von abwerfbaren Lasten, aufgrund von Lasten, deren Leistungsbedarf zwischen einem minimalen und einem maximalen Leistungsbedarf steuerbar/anpassbar ist, oder aufgrund von hybriden Erzeugern anpassbar und insbesondere reduzierbar ist - die Leistungsfähigkeit dieses wenigstens einen Busses nicht übersteigt und etwaig entsprechend reduziert wird.

In einigen Ausführungsformen sind einer oder mehrere der Erzeuger hybride Erzeuger, die mit mindestens zwei Bussen der Vielzahl von Bussen verbunden sind. Dabei korrespondiert die mittels eines solchen hybriden Erzeugers an einem der jeweiligen mindestens zwei Bussen bereitgestellte Leistungsmenge mit einer außerdem bereitgestellten Leistungsmenge an einem anderen der jeweiligen mindestens zwei Busse oder mit einem Leistungsbedarf an dem anderen der jeweiligen mindestens zwei Bussen.

Auch ist in einigen Ausführungsformen ein hybrider Erzeuger eingerichtet, in einen ersten der Busse eine erste Leistungsmenge einzuspeisen oder von dort zu entnehmen sowie in einen zweiten der Busse eine zweite Leistungsmenge einzuspeisen oder von dort zu entnehmen, wobei die erste Leistungsmenge mit der zweiten Leistungsmenge korrespondiert.

Bei einigen Ausführungsformen, bei welchen eine der Komponenten ein hybrider Erzeuger ist, umfasst der jeweilige Versuch des Ausgleichs der Leistungsbilanz des ausgewählten Busses ein Bestimmen eines Gesamtleistungsbedarfs basierend auf den Leistungsbedarfen der mit dem ausgewählten Bus verbundenen Lasten und dem etwaigen Leistungsbedarf des hybriden Erzeugers, sofern er mit dem ausgewählten Bus verbunden ist.

Bei einigen Ausführungsformen, bei welchen eine der Komponenten ein hybrider Erzeuger ist, umfasst der jeweilige Versuch des Ausgleichs der Leistungsbilanz des ausgewählten Busses ein Ausgleichen eines Gesamtleistungsbedarfs des jeweils ausgewählten Busses mittels der zweiten Leistungsmenge, soweit möglich und sofern der hybride Erzeuger mit dem ausgewählten Bus verbunden ist und seine erste Leistungsmenge bereits beim Ausgleichen eines bereits ausgeglichenen Bus festgelegt ist. Weiterhin umfasst der Versuch ein anschließendes Ausgleichen eines übrigen Teils des Gesamtleistungsbedarfs mittels jener Erzeuger, welche mit dem ausgewählten Bus verbunden sind.

In einigen Ausführungsformen umfasst das Verfahren weiterhin ein Zuweisen von Komponenten-Prioritäten zu den Komponenten des jeweiligen Busses und ein Festlegen der energetischen Betriebspunkte beim Versuchen des Ausgleichs der Leistungsbilanz gemäß einer Reihenfolge in Übereinstimmung mit den Komponenten-Prioritäten. Auf diese vorteilhafte Weise lässt sich eine dem Verfahren erzielte Lastenverteilung verbessern. Dabei geben die Komponenten-Prioritäten in einigen Varianten an, in welcher die entsprechenden Erzeuger bzw. Verbraucher am jeweiligen Bus zum Ausgleich der Leistungsbilanz beitragen sollen. Dabei können in einigen Varianten die Komponenten-Prioritäten entsprechend der operationalen Kosten der Komponenten, einer Leistungsfähigkeit der Komponenten, einer Betriebssicherheit der Komponenten oder auch einer kurzfristigen Regelbarkeit der Komponenten bestimmt werden oder ausgewählt sein. Für die Komponenten-Prioritäten, ihre Vorteile und Möglichkeiten - wie bestimmte Weiterbildungen oder Varianten des Verfahrens - zu deren Bestimmen gilt das Voranstehende bezüglich der Bus-Prioritäten entsprechend. So können etwa die Komponenten-Prioritäten auch mittels einer Simulation vorbestimmt werden oder etwa abhängig von einer Uhrzeit oder einem externen Einflussfaktor sein. So kann etwa bei einer Solaranlage als Komponente des Energiesystems die Priorität der Solaranlage tagsüber bei gutem Wetter hoch sein, während sie bei schlechtem oder wechselhaftem Wetter oder nachts niedrig ist.

In einigen Ausführungsformen weisen hybride Erzeuger eine höhere Priorität auf als nicht-hybride Erzeuger. Auf diese vorteilhafte Weise lässt sich der jeweilige Gesamtleistungsbedarfs am jeweils ausgewählten Bus zunächst mittels Verwendung von Leistungsmengen, etwa einem Leistungsüberschuss an einem der anderen Busse, ausgleichen - etwa mittels Konvertierung einer Energieform eines anderen Busses in die jeweilige Energieform für den jeweils ausgewählten Bus, etwa mittels eines hybriden Erzeugers, also etwa eines Energie-Konverters.

Auch wird in einigen Ausführungsformen beim jeweiligen Versuch des Ausgleichs der Leistungsbilanz des jeweils ausgewählten Busses ein Gesamtleistungsbedarf oder ein übriger Teil davon mittels der mit dem jeweils ausgewählten Bus verbundenen Erzeuger in Reihenfolge ihrer jeweiligen Priorität ausgeglichen, wobei eine jeweils bereitzustellende Leistungsmenge festgelegt wird.

In einigen Ausführungsformen weisen die Erzeuger jeweils eine Minimalleistung und eine Maximalleistung für jeden der mit ihnen verbundenen Busse auf. Der Versuch des Ausgleichs der Leistungsbilanz des jeweils ausgewählten Busses umfasst ein Ausgleichen mittels jener der Erzeuger, welche mit dem ausgewählten Bus verbunden sind, wobei deren jeweils bereitzustellende Leistungsmenge im Bereich zwischen ihrer Minimalleistung und ihrer Maximalleistung für den ausgewählten Bus festgelegt wird. Dabei können, insbesondere bei hybriden Erzeugern, ihre Minimalleistung und/oder ihre Maximalleistung bereits aufgrund eines vorhergehenden Ausgleichs eines anderen der Busse, bei welchem eine bei diesem anderen der Busse bereitzustellende Leistungsmenge festgelegt worden ist und der jeweilige hybride Erzeuger entsprechend fixiert worden ist, verändert und etwa eingeschränkt sein. Umgekehrt wird dabei - etwa, wenn der Ausgleich für den jeweiligen Bus nicht erfolgreich ist - bei dem Umwandeln der Kennzeichnung von fixiert in nicht-fixiert eine etwaige Einschränkung der Minimalleistung oder der Maximalleistung entsprechend aufgehoben. Bei hybriden Erzeugern, die mit mehr als zwei Bussen verbunden sind, kann es entsprechend zu einer mehrfachen Beschränkung und etwaigen Aufhebung dieser Beschränkung kommen.

In einigen Ausführungsformen wird das Iterieren bis zu einem Abbruchkriterium fortgesetzt. Dabei umfasst das Abbruchkriterium eines oder mehrere der folgenden Elemente: alle Komponenten sind als fixiert gekennzeichnet; das Versuchen des Ausgleichs schlägt für mindestens einen Bus zu häufig fehl.

In einigen Ausführungsformen weist das Verfahren, falls der Ausgleich eines der Busse - etwaig auch nachdem alle Komponenten, die mit diesem Bus verbunden sind, als nicht-fixiert gekennzeichnet wurden - nicht möglich ist, weiterhin ein Abwerfen einer abwerfbaren Last und ein erneuter Versuch des Ausgleichs dieses Busses oder ein erneutes Iterieren über alle Busse, wobei die Komponenten zunächst als nicht-fixiert gekennzeichnet werden, auf.

In einigen Ausführungsformen sind einer oder mehrere der Verbraucher abwerfbare Lasten und/oder sind eine oder mehrere Leistungsabwurflasten abwerfbare Lasten. Dabei werden, wenn der Ausgleich für einen ausgewählten Bus nicht erfolgreich ist oder der Ausgleich aller Busse nicht erfolgreich ist - also etwa ein Abbruchkriterium vorliegt - eine oder mehrere abwerfbare Lasten abgeworfen, alle Komponenten als nicht-fixiert gekennzeichnet, und das Iterieren über alle Busse re-initialisiert.

Bei einigen Ausführungsformen, bei welchen eine oder mehrere abwerfbare Lasten abgeworfen werden, wird den abwerfbaren Lasten jeweils eine Komponenten-Priorität zugeordnet und werden die abwerfbaren Lasten entsprechend einer Reihenfolge ihrer jeweiligen Komponenten-Priorität abgeworfen, bis der Ausgleich der Leistungsbilanz für alle Busse erfolgreich ist oder keine der abwerfbaren Lasten noch abgeworfen werden kann, also bereits alle der abwerfbaren Lasten abgeworfen worden sind.

In einigen Ausführungsformen berücksichtigt der Ausgleich der Leistungsbilanz die bereits in einer vorangegangenen Iteration festgelegten Betriebspunkte von mit dem entsprechenden Bus verbundenen und als fixiert gekennzeichneten Komponenten. Auch berücksichtigt der Ausgleich der Leistungsbilanz einen Gesamtleistungsbedarf der mit dem entsprechenden Bus verbundenen Verbraucher, sodass die Summe der mittels der mit dem ausgewählten Bus verbundenen Erzeuger bereitgestellten Leistungsmengen den Gesamtleistungsbedarf nicht übersteigt.

Während Ausführungsbeispiele, Anwendungsmöglichkeiten und Anwendungsbeispiele insbesondere unter Bezugnahme auf die Figuren detailliert beschrieben wurden, sei darauf hingewiesen, dass eine Vielzahl von Abwandlungen möglich ist. Außerdem sei darauf hingewiesen, dass es sich bei den exemplarischen Ausführungen und Anwendungen lediglich um Beispiele handelt, die den Schutzbereich, die Anwendung und den Aufbau in keiner Weise einschränken sollen. Vielmehr wird dem Fachmann durch die vorausgehende Beschreibung ein Leitfaden für die Umsetzung und/oder Anwendung von mindestens einem Ausführungsbeispiel gegeben, wobei diverse Abwandlungen, insbesondere alternative oder zusätzliche Merkmale und/oder Abwandlungen der Funktion und/oder Anordnungen der beschriebenen Bestandteile, nach Wunsch des Fachmanns vorgenommen werden können, ohne dass dabei von dem in den angehängten Ansprüchen jeweils festgelegten Gegenstand sowie seiner rechtlichen Äquivalente abgewichen wird und/oder deren Schutzbereich verlassen wird.

## Patentansprüche

1. Computerimplementiertes Verfahren (20, 200) zur Steuerung eines Energiesystems (20) mit mehreren Komponenten (50), die mittels einer Vielzahl (30) von Bussen (31, 32, 33) des Energiesystems miteinander energetisch verbunden sind, wobei die Komponenten Erzeuger (52, 54, 55, 56, 58, 59) und Verbraucher (51, 53, 57) umfassen, wobei die Komponenten wahlweise als nicht-fixiert oder fixiert gekennzeichnet sind, je nachdem ob ihr energetischer Betriebspunkt festgelegt ist, wobei das Verfahren (20) umfasst:
- (230) Iterieren über alle Busse der Vielzahl von Bussen, wobei eine Iteration für den jeweils ausgewählten Bus jeweils aufweist:
-- (240) Versuchen eines Ausgleichs einer Leistungsbilanz des ausgewählten Busses durch Festlegen der energetischen Betriebspunkte von mit dem jeweiligen Bus verbundenen Komponenten, die als nicht-fixiert gekennzeichnet sind;
-- wenn der Ausgleich für den jeweiligen Bus erfolgreich ist (214, 216): (248) Kennzeichnen aller mit dem jeweiligen Bus verbundenen Komponenten als fixiert, und
-- wenn der Ausgleich für den jeweiligen Bus nicht erfolgreich ist (214, 216): (250) Umwandeln der Kennzeichnung von zumindest einer mit dem jeweiligen Bus verbundenen Komponente von fixiert in nicht-fixiert, und (252) Auslösen einer erneuten Iteration für den jeweiligen Bus,
- (220) Zuweisen von Bus-Prioritäten zu den Bussen und Iterieren über alle Busse gemäß einer Reihenfolge in Übereinstimmung (222) mit den Bus-Prioritäten,
- wenn für einen ausgewählten Bus der Ausgleich nicht erfolgreich ist (214, 216): die Kennzeichnung nur für jene Komponenten, welche nur mit dem ausgewählten Bus oder mit dem ausgewählten Bus und einem Bus mit höherer Bus-Priorität verbunden sind, von fixiert in nicht-fixiert (250) umgewandelt wird, und (254) Auslösen einer erneuten Iteration über ein oder mehrere Busse, die eine höhere Priorität haben als der ausgewählte Bus und die mit dem ausgewählten Bus über eine Komponente verbunden sind, die als nicht fixiert gekennzeichnet wird.

2. Verfahren (20, 200) gemäß Anspruch 1, wobei das Verfahren weiterhin umfasst:
- wenn für einen ausgewählten Bus der Ausgleich nicht erfolgreich ist (214, 216): Auslösen einer erneuten Iteration über ein oder mehrere Busse, die mit dem ausgewählten Bus über eine Komponente verbunden sind, deren Kennzeichnung von fixiert in nicht-fixiert umgewandelt wird.

3. Verfahren (20, 200) gemäß einem der voranstehenden Ansprüche, wobei eine oder mehrere der Verbraucher Leistungsabwurflasten sind und wobei beim Ausgleichen der Leistungsbilanz des ausgewählten Busses, sofern ein Leistungsüberschuss vorliegt (214), ein Gesamtleistungsbedarf des ausgewählten Busses mittels einer solchen mit dem ausgewählten Bus verbundenen Leistungsabwurflast erhöht wird (260) .

4. Verfahren (20) gemäß einem der voranstehenden Ansprüche, wobei, nachdem alle Komponenten als fixiert gekennzeichnet sind, das Verfahren weiterhin umfasst:
- (400) Ausführen einer Leistungsoptimierung mit einer oder mehreren Maßnahmen, wobei im Rahmen der Leistungsoptimierung zumindest einige der zuvor festgelegten Betriebspunkte angepasst werden.

5. Verfahren (20) gemäß Anspruch 4, wobei die ein oder mehreren Maßnahmen zumindest eines von Speicherung (440) eines Leistungsüberschusses an einem Bus der Vielzahl von Busse in Energiespeichern, Austausch des Leistungsüberschusses zwischen Bussen der Vielzahl von Bussen, und Abgabe des Leistungsüberschusses über einen externen Netzanschluss des Energiesystems umfassen.

6. Verfahren (20) gemäß Anspruch 5, wobei einer oder mehrere der Erzeuger ressourcenabhängige Erzeuger sind und wobei der Leistungsüberschuss bei einem mit dem ressourcenabhängigen Erzeuger verbundenen Bus erhöht (430) wird, wenn ein vorbestimmtes Kriterium bezüglich einer Ressource für den ressourcenabhängigen Erzeuger erfüllt ist.

7. Verfahren (20) gemäß einem der Ansprüche 4 bis 6, wobei die ein oder mehreren Maßnahmen eine
Energieaustauschsteuerung für einen externen Netzanschluss des Energiesystems umfassen; und
wobei die Energieaustauschsteuerung zumindest eines von einem internen und externen Lastausgleich (420) umfasst.

8. Verfahren (20, 200) gemäß einem der vorhergehenden Ansprüche, wobei einer oder mehrere der Erzeuger Energiespeicher sind, welche jeweils einen Füllstand und/oder eine Priorität aufweisen, und wobei beim Ausgleich der Leistungsbilanz des jeweiligen Busses für wenigstens einen solchen mit dem jeweiligen Bus verbundenen Energiespeicher basierend auf seinem Füllstand und/oder seiner Priorität bestimmt wird, ob mittels diesem eine bestimmte Leistungsmenge bereitstellt oder in diesen rückgespeist wird.

9. Verfahren (20, 200) gemäß einem der voranstehenden Ansprüche, wobei einer oder mehrere der Erzeuger hybride Erzeuger (54, 55, 59) sind, die mit mindestens zwei Bussen der Vielzahl von Bussen verbunden sind,
wobei die mittels eines solchen hybriden Erzeugers an einem der jeweiligen mindestens zwei Bussen bereitgestellte Leistungsmenge mit einer außerdem bereitgestellten Leistungsmenge an einem anderen der jeweiligen mindestens zwei Busse oder mit einem Leistungsbedarf an dem anderen der jeweiligen mindestens zwei Bussen korrespondiert.

10. Verfahren (20, 200) gemäß einem der voranstehenden Ansprüche, wobei das Verfahren für jeden Bus der Vielzahl von Bussen weiterhin umfasst:
- (248) Zuweisen von Komponenten-Prioritäten zu den Komponenten des jeweiligen Busses und Festlegen der energetischen Betriebspunkte beim Versuchen des Ausgleichs der Leistungsbilanz gemäß einer Reihenfolge in Übereinstimmung mit den Komponenten-Prioritäten.

11. Verfahren (20, 200) gemäß einem der voranstehenden Ansprüche, wobei das Iterieren bis zu einem Abbruchkriterium (212, 218) fortgesetzt wird, und wobei das Abbruchkriterium ein oder mehrere der folgenden Elemente aufweist: alle Komponenten sind als fixiert gekennzeichnet; das Versuchen des Ausgleichs schlägt für mindestens einen Bus zu häufig fehl.

12. Verfahren (20) gemäß einem der voranstehenden Ansprüche, wobei einer oder mehrerer der Verbraucher abwerfbare Lasten sind, wobei das Verfahren (20) weiterhin umfasst:
- wenn der Ausgleich für einen ausgewählten Bus nicht erfolgreich ist (12, 214): (14, 26) Abwerfen einer oder mehrerer abwerfbarer Lasten, Kennzeichnen aller Komponenten als nicht-fixiert, und Re-Initialisieren des Iterierens über alle Busse.

13. Computerprogrammlogik (120), die eingerichtet ist, um das Verfahren (20, 200) nach einem der voranstehenden Ansprüche auszuführen.

14. Vorrichtung (100) zur Steuerung eines Energiesystems (10) mit mehreren Komponenten (50), die mittels einer Vielzahl (30) von Bussen (31, 32, 33) des Energiesystems miteinander energetisch verbunden sind, wobei die Komponenten Erzeuger (52, 54, 55, 56, 58, 59) und Verbraucher (51, 53, 57) umfassen, wobei die Komponenten wahlweise als nicht-fixiert oder fixiert gekennzeichnet sind, je nachdem ob ihr energetischer Betriebspunkt festgelegt ist,
wobei die Vorrichtung (100) eine Computerprogrammlogik (120) oder eine Steuerungseinrichtung aufweist, die eingerichtet ist, das Verfahren nach einem der Ansprüche 1 bis 12 auszuführen.

## Claims

1. Computer-implemented method (20, 200) for controlling an energy system (20) having multiple components (50) connected to one another by means of a multiplicity (30) of buses (31, 32, 33) of the energy system for energy transmission purposes, the components comprising generators (52, 54, 55, 56, 58, 59) and consumers (51, 53, 57), wherein the components are labelled as either non-fixed or fixed, depending on whether their energy operating point is specified,
wherein the method (20) comprises:
- (230) performing an iteration process via all of the buses of the multiplicity of buses, an iteration for the respectively selected bus respectively comprising:
-- (240) attempting to balance a power budget of the selected bus by specifying the energy operating points of components connected to the respective bus that are labelled as non-fixed;
-- if the balancing for the respective bus is successful (214, 216): (248) labelling all of the components connected to the respective bus as fixed, and
-- if the balancing for the respective bus is not successful (214, 216): (250) converting the label of at least one component connected to the respective bus from fixed to non-fixed, and (252) triggering a fresh iteration for the respective bus,
- (220) allocating bus priorities to the buses and performing an iteration process via all of the buses in an order in accordance (222) with the bus priorities,
- if the balancing for a selected bus is not successful (214, 216): only the label for those components that are connected to the selected bus only or to the selected bus and a bus having higher bus priority is converted from fixed to non-fixed (250), and (254) triggering a fresh iteration via one or more buses that have a higher priority than the selected bus and that are connected to the selected bus via a component that is labelled as non-fixed.

2. Method (20, 200) according to Claim 1, wherein the method additionally comprises:
- if the balancing for a selected bus is not successful (214, 216): triggering a fresh iteration via one or more buses that are connected to the selected bus via a component whose label is converted from fixed to non-fixed.

3. Method (20, 200) according to either of the preceding claims, wherein one or more of the consumers are power shedding loads and wherein, during the balancing of the power budget of the selected bus, provided that excess power is available (214), a total power demand of the selected bus is increased (260) by means of such a power shedding load connected to the selected bus.

4. Method (20) according to one of the preceding claims, wherein, after all of the components are labelled as fixed, the method additionally comprises:
- (400) performing power optimization by means of one or more measures, the power optimization involving at least some of the previously specified operating points being adapted.

5. Method (20) according to Claim 4, wherein the one or more measures comprise at least one from storing (440) excess power on one bus of the multiplicity of buses in energy stores, exchanging the excess power between buses of the multiplicity of buses, and delivering the excess power via an external grid connection of the energy system.

6. Method (20) according to Claim 5, wherein one or more of the generators are resource-dependent generators and wherein the excess power for a bus connected to the resource-dependent generator is increased (430) if a predetermined criterion with regard to a resource is met for the resource-dependent generator.

7. Method (20) according to one of Claims 4 to 6, wherein the one or more measures comprise energy exchange control for an external grid connection of the energy system; and
wherein the energy exchange control comprises at least one from internal and external load balancing (420).

8. Method (20, 200) according to one of the preceding claims, wherein one or more of the generators are energy stores that each have a fill level and/or a priority, and wherein during the balancing of the power budget of the respective bus it is determined for at least one such energy store connected to the respective bus, based on the fill level and/or priority of said energy store, whether a specific amount of power is provided thereby or fed back thereto.

9. Method (20, 200) according to one of the preceding claims, wherein one or more of the generators are hybrid generators (54, 55, 59) connected to at least two buses of the multiplicity of buses,
the amount of power provided on one of the respective at least two buses by means of a hybrid generator of this kind corresponding to an additionally provided amount of power on one other of the respective at least two buses or to a power demand on the other of the respective at least two buses.

10. Method (20, 200) according to one of the preceding claims, wherein the method for each bus of the multiplicity of buses additionally comprises:
- (248) allocating component priorities to the components of the respective bus and specifying the energy operating points, when attempting to balance the power budget, in an order in accordance with the component priorities.

11. Method (20, 200) according to one of the preceding claims, wherein the performance of an iteration process is continued up to a termination criterion (212, 218), and wherein the termination criterion comprises one or more of the following elements: all of the components are labelled as fixed; the attempt at balancing fails too frequently for at least one bus.

12. Method (20) according to one of the preceding claims, wherein one or more of the consumers are sheddable loads, the method (20) additionally comprising:
- if the balancing for a selected bus is not successful (12, 214): (14, 26) shedding one or more sheddable loads, labelling all of the components as non-fixed, and reinitializing the performance of an iteration process via all of the buses.

13. Computer program logic unit (120) configured to carry out the method (20, 200) according to one of the preceding claims.

14. Apparatus (100) for controlling an energy system (10) having multiple components (50) connected to one another by means of a multiplicity (30) of buses (31, 32, 33) of the energy system for energy transmission purposes, the components comprising generators (52, 54, 55, 56, 58, 59) and consumers (51, 53, 57), wherein the components are labelled as either non-fixed or fixed, depending on whether their energy operating point is specified,
wherein the apparatus (100) comprises a computer program logic unit (120) or a control device that is configured to carry out the method according to one of Claims 1 to 12.

## Revendications

1. Procédé mis en œuvre par ordinateur (20, 200) destiné à la commande d'un système énergétique (20) avec plusieurs composants (50) qui sont reliés énergétiquement les uns avec les autres au moyen d'une pluralité (30) de bus (31, 32, 33) du système énergétique, dans lequel les composants comprennent des producteurs (52, 54, 55, 56, 58, 59) et des consommateurs (51, 53, 57), dans lequel les composants sont caractérisés sélectivement comme étant non fixés ou fixés, selon que leur point de fonctionnement énergétique est défini, dans lequel le procédé (20) comprend :
- (230) l'itération sur tous les bus de la pluralité de bus, dans lequel une itération pour le bus respectivement présente à chaque fois :
-- (240) la recherche d'un équilibre d'un bilan de puissance du bus sélectionné par le biais de la définition des points de fonctionnement énergétique de composants reliés au bus respectif qui sont caractérisés comme étant non fixés ;
-- lorsque l'équilibre pour le bus respectif est atteint (214, 216) : (248) la caractérisation de tous les composants reliés au bus respectif comme tant fixés, et
-- lorsque l'équilibre pour le bus respectif n'est pas atteint (214, 216) : (250) la conversion de la caractérisation d'au moins un des composants reliés au bus respectif de fixé à non fixé, et (252) le déclenchement d'une itération renouvelée pour le bus respectif,
- (220) l'attribution de priorités de bus aux bus et l'itération sur tous les bus selon un ordre conformément (222) aux priorités de bus,
- lorsque l'équilibre n'est pas atteint (214, 216) pour un bus sélectionné : la caractérisation est transformée de fixée à non fixée (250) uniquement pour les composants qui sont reliés uniquement au bus sélectionné ou au bus sélectionné et à un bus avec une priorité de bus plus élevée, et (254) le déclenchement d'une itération renouvelée sur un ou plusieurs bus qui ont une priorité plus élevée que le bus sélectionné et qui sont reliés au bus sélectionné par l'intermédiaire d'un composant qui n'est pas caractérisé comme étant non fixé.

2. Procédé (20, 200) selon la revendication 1, dans lequel le procédé comprend en outre :
- lorsque l'équilibre n'est pas atteint (214, 216) pour un bus sélectionné : le déclenchement d'une itération renouvelée sur un ou plusieurs bus qui sont reliés au bus sélectionné par l'intermédiaire d'un composant dont la caractérisation est transformée de fixé à non fixé.

3. Procédé (20, 200) selon l'une quelconque des revendications précédentes, dans lequel un ou plusieurs des consommateurs sont des charges de libération de puissance et dans lequel lors de l'équilibrage du bilan de puissance du bus sélectionné, dans la mesure où il y a (214) un excédent de puissance, un besoin en puissance global du bus sélectionné est augmenté (260) au moyen d'une telle charge de libération de puissance reliée au bus sélectionné.

4. Procédé (20) selon l'une quelconque des revendications précédentes, dans lequel après que tous les composants ont été caractérisés comme étant fixés, le procédé comprend en outre :
- (400) la réalisation d'une optimisation de puissance avec une ou plusieurs mesures, dans lequel dans le cadre de l'optimisation de puissance au moins quelques-uns des points de fonctionnement définis préalablement sont adaptés.

5. Procédé (20) selon la revendication 4, dans lequel les une ou plusieurs mesures d'au moins une mémoire (440) d'un excédent de puissance comprennent au niveau d'un bus de la pluralité de bus dans l'accumulation d'énergie l'échange de l'excédent de puissance entre des bus de la pluralité de bus et le rejet de l'excédent de puissance par l'intermédiaire d'un raccordement au réseau externe du système énergétique.

6. Procédé (20) selon la revendication 5, dans lequel un ou plusieurs des producteurs sont des producteurs dépendants de ressources et dans lequel l'excédent de puissance est augmenté (430) dans un bus relié au producteur dépendant de ressources lorsqu'un critère prédéterminé concernant une ressource pour le producteur dépendant de ressources est respecté.

7. Procédé (20) selon l'une quelconque des revendications 4 à 6, dans lequel les une ou plusieurs mesures comprennent une commande d'échange énergétique pour un raccordement au réseau externe du système énergétique ; et
dans lequel la commande d'échange énergétique comprend au moins l'un d'un équilibre de charge interne et d'un équilibre de charge externe (420).

8. Procédé (20, 200) selon l'une quelconque des revendications précédentes, dans lequel un ou plusieurs des producteurs sont des accumulateurs d'énergie qui présentent respectivement un niveau de remplissage et/ou une priorité, et dans lequel lors de l'équilibre le bilan de puissance du bus respectif pour au moins un tel accumulateur d'énergie relié au bus respectif sur la base de son niveau de remplissage et/ou de sa priorité est déterminé si au moyen de celui-ci une quantité de puissance déterminée est mise à disposition ou récupérée dans celui-ci.

9. Procédé (20, 200) selon l'une quelconque des revendications précédentes, dans lequel un ou plusieurs des producteurs sont des producteurs hybrides (54, 55, 59) qui sont reliés à au moins deux bus de la pluralité de bus,
dans lequel la quantité de puissance mise à disposition au moyen d'un tel producteur hybride au niveau des au moins deux bus respectifs correspond à une quantité de puissance mise en outre à disposition au niveau d'un autre des au moins deux bus respectifs ou à un besoin de puissance au niveau de l'autre des au moins deux bus respectifs.

10. Procédé (20, 200) selon l'une quelconque des revendications précédentes, dans lequel le procédé pour chaque bus de la pluralité de bus comprend en outre :
- (248) l'attribution de priorités de composant aux composants du bus respectif et la détermination des points de fonctionnement énergétique lors de la recherche de l'équilibre du bilan de puissance selon un ordre conformément aux priorités de composant.

11. Procédé (20, 200) selon l'une quelconque des revendications précédentes, dans lequel l'itération se poursuit jusqu'à un critère de rupture (212, 218) et dans lequel le critère de rupture présente un ou plusieurs des éléments suivants :
tous les composants sont caractérisés comme étant fixés ; la recherche de l'équilibre échoue trop fréquemment pour au moins un bus.

12. Procédé (20) selon l'une quelconque des revendications précédentes, dans lequel un ou plusieurs des consommateurs sont des charges pouvant être rejetées, dans lequel le procédé (20) comprend en outre :
- lorsque l'équilibre pour un bus sélectionné n'est pas atteint (12 ; 214) : (14, 26) le rejet d'une ou plusieurs charges pouvant être rejetées, la caractérisation de tous les composants comme étant non fixés, et la réinitialisation de l'itération sur tous les bus.

13. Logique de programme informatique (120) qui est conçue pour réaliser le procédé (20, 200) selon l'une quelconque des revendications précédentes.

14. Dispositif (100) destiné à la commande d'un système énergétique (10) avec plusieurs composants (50) qui sont reliés énergétiquement les uns aux autres au moyen d'une pluralité (30) de bus (31, 32, 33) du système énergétique, dans lequel les composants comprennent des producteurs (52, 54, 55, 56, 58, 59) et des consommateurs (51, 53, 57), dans lequel les composants sont caractérisés sélectivement comme étant non fixés ou fixés, selon que leur point de fonctionnement énergétique est défini,
dans lequel le dispositif (100) présente une logique de programme informatique (120) ou un système de commande qui est conçu pour réaliser le procédé selon l'une quelconque des revendications 1 à 12.
